# EUROPEAN PATENT APPLICATION

(11) **EP 4 718 857 A1**
(43) Date of publication of application: **01.04.2026**
(21) Application number: 25205096.8
(22) Date of filing: 26.09.2025
(51) Int. Cl.: H04N 23/45, H04N 23/90, H04N 23/62, H04N 23/63, H04N 13/239, G06V 20/20, G06F 3/01, G02B 27/00

(54) **CAMERA SELECTION BASED ON GAZE**

(30) Priority: 26.09.2024 US 202463699749 P; 17.09.2025 US 202519331742
(71) Applicant: Apple Inc., Cupertino, CA 95014 (US)
(72) Inventor: LINDMEIER, William D., Cupertino, 95014 (US); CHALMERS, Devin W., Cupertino, 95014 (US); KELLY, Sean B., Cupertino, 95014 (US)
(74) Representative: Barton, Russell Glen

(57) **Abstract**

An electronic device, such as a head-mounted device, is equipped with or communicates with one or more input devices, including a first camera with a first lens and a second camera with a second lens. In some examples, the electronic device detects a gaze of a user directed at an object within the three-dimensional environment and extracts data corresponding to the object based on images captured with the first lens. In response to extracting the data, in accordance with a determination that one or more criteria are satisfied, including a criterion that is satisfied when the data has a quality metric below a quality metric threshold, the electronic device extracts the data based on images captured with the second lens, and in accordance with a determination that the one or more criteria are not satisfied, the electronic device forgoes extracting the data based on the images captured with the second lens.

## Description

### Cross Reference to Related Applications

This application claims the benefit of U.S. Provisional Application No. 63/699,749, filed September 26, 2024, and U.S. Patent Application No. 19/331,742, filed September 17, 2025, the entire disclosure of which is herein incorporated by reference for all purposes.

### Field of the Disclosure

This relates generally to user-interactive camera systems used to process data, and more particularly to adaptive camera selection based on user interaction and image quality.

### Background of the Disclosure

Electronic devices often include multiple cameras, such as telephone lenes or wide-angle lenses. Different lenses are selectable by a user to capture images depending on the desired focus of the image.

### Summary of the Disclosure

An electronic device, such as a head-mounted device, is equipped with or communicates with one or more input devices. In some examples, the one or more input devices include a first camera with a first lens and a second camera with a second lens, wherein the first lens corresponds to a first lens type and the second lens corresponds to a second lens type, different from the first lens type. In some examples, the electronic device detects, via the one or more input devices, a gaze of a user directed at a first object within the three-dimensional environment. In some examples, the electronic device extracts first data corresponding to the first object based on one or more images captured with the first lens. In some examples, in response to extracting the first data corresponding to the first object, in accordance with a determination that one or more criteria are satisfied, including a criterion that is satisfied when the first data corresponding to the first object has a first quality metric below a quality metric threshold , the electronic device extracts the first data corresponding to the first object based on one or more images captured with the second lens. In some examples, in accordance with a determination that the one or more criteria are not satisfied, the electronic device forgoes extracting the first data corresponding to the first object based on the one or more images captured with the second lens. In some examples, the electronic device switches between the first and second lenses to improve image capture based on user gaze and quality metric evaluations, without necessarily performing further data extraction, such as extracting the first data corresponding to the first object based on the one or more images captured with the second lens.

The full descriptions of the examples are provided in the Drawings and the Detailed Description, and it is understood that the Summary of the Disclosure provided above does not limit the scope of the disclosure in any way.

### Brief Description of the Drawings

FIG. 1 illustrates an electronic device presenting a three-dimensional environment and a hand-held electronic device, in accordance with some examples of the disclosure.
FIGs. 2A-2B illustrate block diagrams of example architectures for electronic devices, in accordance with some examples of the disclosure.
FIGs. 3A-3C illustrate examples of an electronic device extracting data corresponding to an object within a three-dimensional environment based on images captured with different camera lenses, in accordance with some examples of the disclosure.
FIGs. 4A-4B illustrate examples of an electronic device extracting data corresponding to an object within a three-dimensional environment based on images captured with different camera lenses and a user input, in accordance with some examples of the disclosure.
FIGs. 5A-5B illustrate examples of an electronic device extracting data corresponding to one or more objects within a three-dimensional environment and providing the data to a large language model, in accordance with some examples of the disclosure.
FIGs. 6A-6B illustrate examples of an electronic device extracting data corresponding to an object within a three-dimensional environment based on images captured with different camera lenses, in accordance with some examples of the disclosure.
FIGs. 7A-7B illustrate examples of an electronic device providing instructions to a user to engage in actions that increase a quality metric of an image captured with a camera to aid in data extraction, in accordance with some examples of the disclosure.
FIG. 8 is a flowchart illustrating an example method for extracting data corresponding to an object within a three-dimensional environment based on images captured with different camera lenses, in accordance with some examples of the disclosure.

### Detailed Description

Disclosed herein is an electronic device, such as a head-mounted device, which is equipped with or communicates with one or more input devices. In some examples, the one or more input devices include a first camera with a first lens and a second camera with a second lens, wherein the first lens corresponds to a first lens type and the second lens corresponds to a second lens type, different from the first lens type. In some examples, the electronic device detects, via the one or more input devices, a gaze of a user directed at a first object within the three-dimensional environment. In some examples, the electronic device extracts first data corresponding to the first object based on one or more images captured with the first lens. In some examples, in response to extracting the first data corresponding to the first object, in accordance with a determination that one or more criteria are satisfied, including a criterion that is satisfied when the first data corresponding to the first object has a first quality metric below a quality metric threshold, the electronic device extracts the first data corresponding to the first object based on one or more images captured with the second lens. In some examples, in accordance with a determination that the one or more criteria are not satisfied, the electronic device forgoes extracting the first data corresponding to the first object based on the one or more images captured with the second lens.

The disclosed gaze-based, quality-metric-controlled camera selection methods produce concrete technical effects at the device level. For example, by using a gaze of the user to define a region of interest and initially extracting data from a wide-angle view, the device is able to switch to a telephoto or wider-angle lens when captured data for that region falls below a quality metric threshold or when the object type or distance indicates higher fidelity is needed. This targeted, on-demand use of cameras reduces the duration for which sensors remain active, lowers processor and memory activity associated with image capture and data extraction, and decreases communication circuitry usage and uplink traffic, thereby improving battery life, reducing a thermal load of the device, and conserving computational and storage resources. As another example, restricting processing to gaze-aligned portions of an image (e.g., applying OCR only to a label at the gaze point) limits the number of pixels processed and/or stored, while presenting an overlay of an enlarged portion of the object based on higher-fidelity images improves responsiveness of the device. As yet another example, lens selection based on gaze direction, object type, and/or distance improves recognition accuracy, handles occluded or small features more effectively, and provides fallback operation when one lens is unavailable, thereby enhancing robustness and system availability.

As used herein, a quality metric encompasses any quantitative measure of the suitability of an image, an image region (e.g., a gaze-aligned region of interest), and/or data derived from an image for a downstream task (e.g., recognition, tracking, text parsing, and/or depth estimation). Some examples of quality metrics include, but are not limited to, fidelity, sharpness, focus, noise, signal-to-noise ratio (SNR), optical or lens distortion, contrast, exposure, motion, stability, scale, visibility, color, optics, compression, depth, illumination, and/or occlusion. References to "fidelity" (including "threshold fidelity") are non-limiting examples of such a quality metric (and of a "quality metric threshold") and are optionally used interchangeably where appropriate.

In the following description of examples, reference is made to the accompanying drawings which form a part hereof, and in which it is shown by way of illustration specific examples that are optionally practiced. It is to be understood that other examples are optionally used, and structural changes are optionally made without departing from the scope of the disclosed examples.

An electronic device, such as a head-mounted device, is equipped with or communicates with one or more input devices. In some examples, the input devices include one cameras to detect a user's gaze and one or more cameras to detect an environment. In some examples, the input devices also include one or more text or audio input components (e.g., microphones, keyboards, touch sensor panels, etc.). In some examples, the electronic device uses the one or more cameras to capture an image of the environment and uses a user's gaze to capture a subset of the image of the environment (e.g., a cropped version of the image). In effect, the gaze is used to capture a region of interest toward which the gaze is directed. The region of interest can include one or more objects of interest. In some examples, one or more characteristics of the region of interest is based on the user query (e.g., a voice or text input). In some examples, the image, the subset of the image, and the user query are inputs from which an action can be determined. Use of gaze with the user query can improve the accuracy of the operation performed by the electronic device in response to the user input.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described examples. The first touch and the second touch are both touches, but they are not the same touch.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

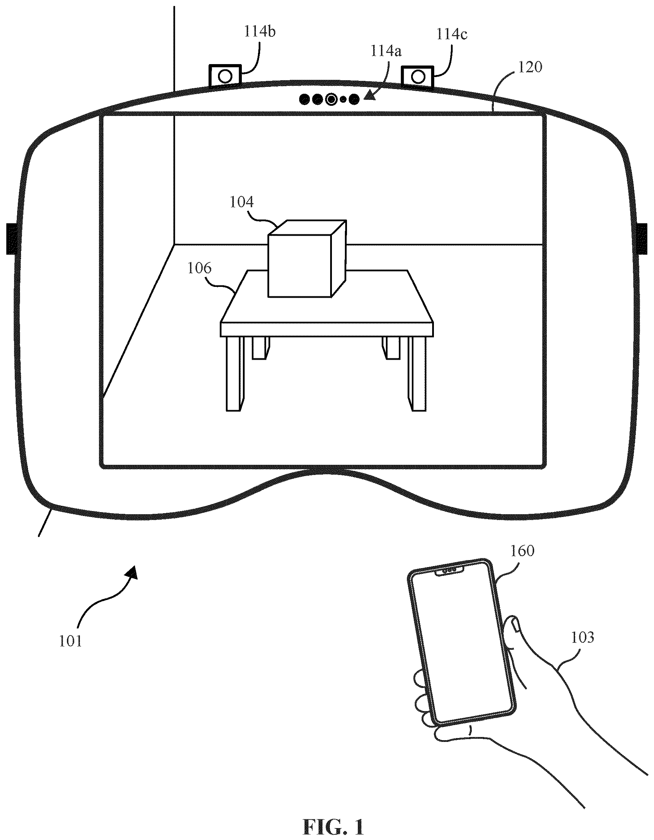

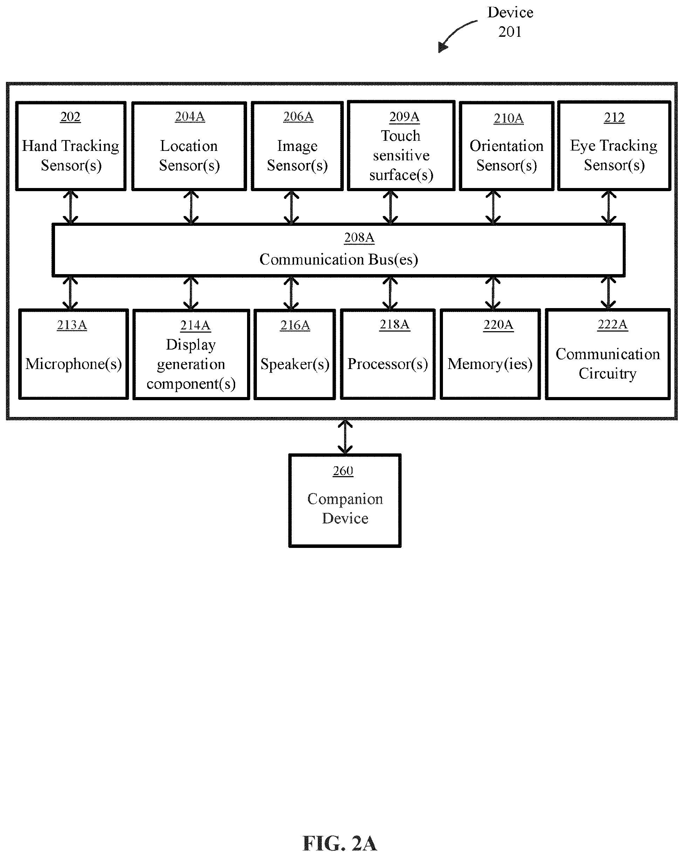

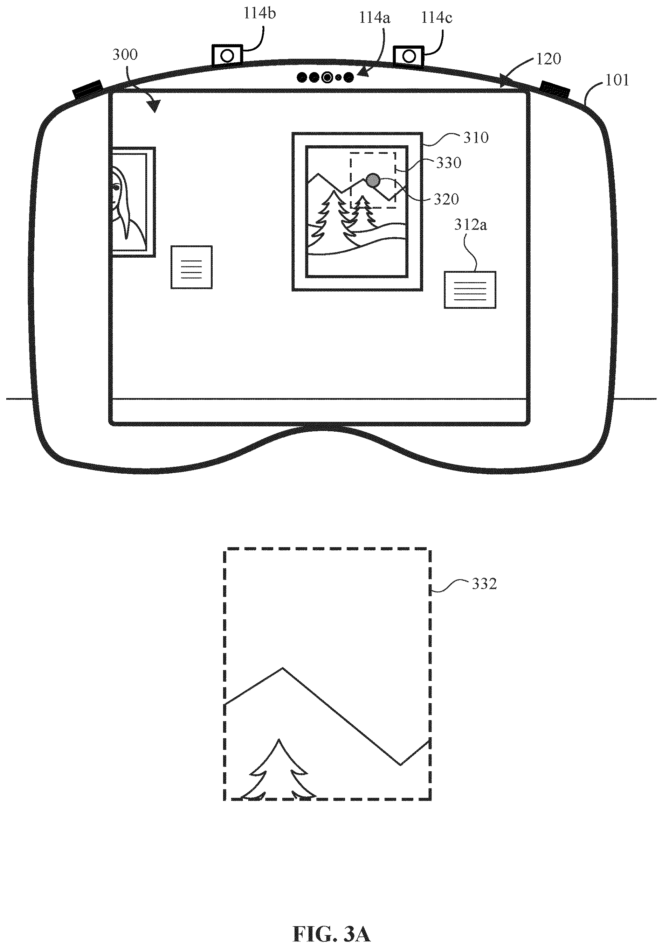

FIG. 1 illustrates an electronic device 101 presenting an extended reality (XR) environment (e.g., a computer-generated environment optionally including representations of physical and/or virtual objects) according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and various objects (discussed in further detail below) are located in a physical environment (herein labeled as three-dimensional environment 130). The three-dimensional environment 130 may include physical features such as a physical surface (e.g., floor, walls) or a physical object (e.g., table, lamp, etc.). In some examples, electronic device 101 may be configured to detect and/or capture images of the physical environment including painting 310 and label 312 (illustrated in the field of view of electronic device 101 discussed below with reference to FIGs. 3A-3C).

In some examples, as shown in FIG. 1, electronic device 101 includes one or more internal image sensors 114a oriented towards a face of the user (e.g., eye tracking cameras described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the three-dimensional environment of the electronic device 101 and/or movements of the user's hands or other body parts.

In some examples, display 120 has a field of view visible to the user (e.g., that may or may not correspond to a field of view of external image sensors 114b and 114c). Because display 120 is optionally part of a head-mounted device, the field of view of display 120 is optionally the same as or similar to the field of view of the user's eyes. In other examples, the field of view of display 120 may be smaller than the field of view of the user's eyes. In some examples, electronic device 101 may be an optical see-through device in which display 120 is a transparent or translucent display through which portions of the three-dimensional environment may be directly viewed. In some examples, display 120 may be included within a transparent lens and may overlap all or a portion of the transparent lens. In other examples, electronic device may be a video-passthrough device in which display 120 is an opaque display configured to display images of the three-dimensional environment captured with external image sensors 114b and 114c. While a single display 120 is shown, it should be appreciated that display 120 may include a stereo pair of displays. In some examples, the head mounted device includes does not include a display 120 (e.g., optionally includes transparent lens), and display functionality is achieved via electronic device 160.

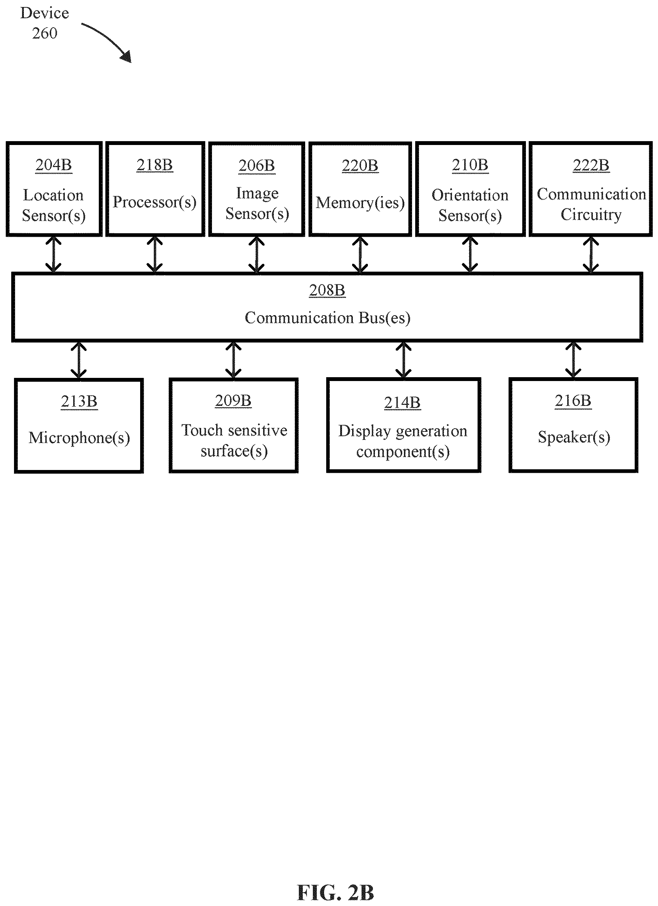

In some examples, the electronic device 101 may be configured to communicate with a second electronic device, such as a companion device. For example, as illustrated in FIG. 1, the electronic device 101 may be in communication with hand-held electronic device 160. In some examples, the hand-held electronic device 160 corresponds to a mobile electronic device, such as a smartphone, a tablet computer, a smart watch, or other electronic device. Additional examples of hand-held electronic device 160 are described below with reference to the architecture block diagram of FIG. 2B. In some examples, the electronic device 101 and the hand-held electronic device 160 are associated with a same user. For example, in FIG. 1, the electronic device 101 may be positioned (e.g., mounted) on a head of a user and the hand-held electronic device 160 may be positioned near electronic device 101, such as in a hand 103 of the user (e.g., the hand 103 is holding of the hand-held electronic device 160), and the electronic device 101 and the hand-held electronic device 160 are associated with a same user account of the user (e.g., the user is logged into the user account on the electronic device 101 and the hand-held electronic device 160). Additional details regarding the communication between the electronic device 101 and the hand-held electronic device 160 are provided below with reference to FIGs. 2A-2B. Although primarily described as a hand-held electronic device herein, it is understood that hand-held electronic device 160 may be a non-hand-held device.

In some examples, while presenting a three-dimensional environment including one or more physical objects, the user of the head mounted device may initiate interaction with one or more physical objects in the three-dimensional environment. In some examples, the interaction can include a user query. In some examples, the interaction can include addition input associated with other input devices. For example, a user's gaze may be tracked by the electronic device as an input for identifying a region of interest corresponding to the one or more physical objects associated with the user inquiry. Additionally or alternatively, in some examples, hand-tracking input can be used for identifying a region of interest corresponding to one or more physical objects.

In the discussion that follows, an electronic device that is in communication with a display and one or more input devices is described. It should be understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it should be understood that the described electronic device, display and touch-sensitive surface are optionally distributed amongst two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information. In some examples, the electronic device includes one or more hand tracking devices and/or one or more eye tracking devices, without including a display.

The electronic devices herein can support a variety of applications. For example, the one or more input devices can be used for generating input for interaction with one or more applications and/or the one or more displays can be used for displaying the applications and associated user interfaces. The one or more applications can include one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2B illustrate block diagrams of example architectures for electronic devices 201 and 260 according to some examples of the disclosure. In some examples, electronic device 201 and/or electronic device 260 include one or more electronic devices. For example, the electronic device 201 may be a portable device, an auxiliary device in communication with another device, a head-mounted display, head-mounted device, etc., respectively. In some examples, electronic device 201 corresponds to electronic device 101 described above with reference to FIG. 1. In some examples, electronic device 260 corresponds to hand-held electronic device 160 described above with reference to FIG. 1.

As illustrated in FIG. 2A, the electronic device 201 optionally includes various sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), one or more displays 214A, optionally corresponding to display 120 in FIG. 1, one or more speakers 216A, one or more processors 218A, one or more memories 220A, and/or communication circuitry 222A. One or more communication buses 208A are optionally used for communication between the above-mentioned components of electronic devices 201. Additionally, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more displays 214B, one or more speakers 216B, one or more processors 218B, one or more memories 220B, and/or communication circuitry 222B. One or more communication buses 208B are optionally used for communication between the above-mentioned components of electronic device 260. The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}.

Processor(s) 218A, 218B include one or more general processors, one or more graphics processors, and/or one or more digital signal processors. In some examples, memory 220A or 220B is a non-transitory computer-readable storage medium (e.g., flash memory, random access memory, or other volatile or non-volatile memory or storage) that stores computer-readable instructions configured to be executed by processor(s) 218A, 218B to perform the techniques, processes, and/or methods described below. In some examples, memory 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, display(s) 214A, 214B include a single display (e.g., a liquid-crystal display (LCD), organic light-emitting diode (OLED), or other types of display). In some examples, display(s) 214A, 214B includes multiple displays. In some examples, display(s) 214A, 214B can include a display with touch capability (e.g., a touch screen), a projector, a holographic projector, a retinal projector, a transparent or translucent display, etc. In some examples, electronic devices 201 and 260 include touch-sensitive surface(s) 209A and 209B, respectively, for receiving user inputs, such as tap inputs and swipe inputs or other gestures. In some examples, display(s) 214A, 214B and touch-sensitive surface(s) 209A, 209B form touch-sensitive display(s) (e.g., a touch screen integrated with each of electronic devices 201 and 260 or external to each of electronic devices 201 and 260 that is in communication with each of electronic devices 201 and 260).

In some examples, electronic devices 201 and 260 optionally include image sensor(s) 206A and 206B, respectively. Image sensors(s) 206A, 206B optionally include one or more visible light image sensors, such as charged coupled device (CCD) sensors, and/or complementary metal-oxide-semiconductor (CMOS) sensors operable to obtain images of physical objects from the real-world environment. Image sensor(s) 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. Image sensor(s) 206A, 206B also optionally include one or more cameras configured to capture movement of physical objects in the real-world environment. Image sensor(s) 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment.

In some examples, electronic device 201, 260 uses CCD sensors, event cameras, and depth sensors in combination to detect the three-dimensional environment around electronic device 201, 260. In some examples, image sensor(s) 206A, 206B include a first image sensor and a second image sensor. The first image sensor and the second image sensor work in tandem and are optionally configured to capture different information of physical objects in the real-world environment. In some examples, the first image sensor is a visible light image sensor and the second image sensor is a depth sensor. In some examples, electronic device 201, 260 uses image sensor(s) 206A, 206B to detect the position and orientation of electronic device 201, 260 and/or display(s) 214A, 214B in the real-world environment. For example, electronic device 201, 260 uses image sensor(s) 206A, 206B to track the position and orientation of display(s) 214A, 214B relative to one or more fixed objects in the real-world environment.

In some examples, electronic devices 201 and 260 include microphone(s) 213A and 213B, respectively, or other audio sensors. Electronic device 201, 260 optionally uses microphone(s) 213A, 213B to detect sound from the user and/or the real-world environment of the user. In some examples, microphone(s) 213A, 213B includes an array of microphones (a plurality of microphones) that optionally operate in tandem, such as to identify ambient noise or to locate the source of sound in space of the real-world environment.

In some examples, electronic devices 201 and 260 include location sensor(s) 204A and 204B, respectively, for detecting a location of electronic device 201A and/or display(s) 214A and a location of electronic device 260 and/or display(s) 214B, respectively. For example, location sensor(s) 204A, 204B can include a global positioning system (GPS) receiver that receives data from one or more satellites and allows electronic device 201, 260 to determine the device's absolute position in the physical world.

In some examples, electronic devices 201 and 260 include orientation sensor(s) 210A and 210B, respectively, for detecting orientation and/or movement of electronic device 201 and/or display(s) 214A and orientation and/or movement of electronic device 260 and/or display(s) 214B, respectively. For example, electronic device 201, 260 uses orientation sensor(s) 210A, 210B to track changes in the position and/or orientation of electronic device 201, 260 and/or display(s) 214A, 214B, such as with respect to physical objects in the real-world environment. Orientation sensor(s) 210A, 210B optionally include one or more gyroscopes and/or one or more accelerometers.

In some examples, electronic device 201 includes hand tracking sensor(s) 202 and/or eye tracking sensor(s) 212 (and/or other body tracking sensor(s), such as leg, torso and/or head tracking sensor(s)), in some examples. Hand tracking sensor(s) 202 are configured to track the position/location of one or more portions of the user's hands, and/or motions of one or more portions of the user's hands with respect to the extended reality environment, relative to the display(s) 214A, and/or relative to another defined coordinate system. Eye tracking sensor(s) 212 are configured to track the position and movement of a user's gaze (eyes, face, or head, more generally) with respect to the real-world or extended reality environment and/or relative to the display(s) 214A. In some examples, hand tracking sensor(s) 202 and/or eye tracking sensor(s) 212 are implemented together with the display(s) 214A. In some examples, the hand tracking sensor(s) 202 and/or eye tracking sensor(s) 212 are implemented separate from the display(s) 214A. In some examples, electronic device 201 alternatively does not include hand tracking sensor(s) 202 and/or eye tracking sensor(s) 212. In some such examples, the display(s) 214A may be utilized by the electronic device 260 to provide an extended reality environment and utilize input and other data gathered via the other sensor(s) (e.g., the one or more location sensors 204A, one or more image sensors 206A, one or more touch-sensitive surfaces 209A, one or more motion and/or orientation sensors 210A, and/or one or more microphones 213A or other audio sensors) of the electronic device 201 as input and data that is processed by the processor(s) 218B of the electronic device 260. Additionally or alternatively, electronic device 201 optionally does not include other components shown in FIG. 2B, such as location sensors 204B, image sensors 206B, touch-sensitive surfaces 209B, etc. In some such examples, the display(s) 214A may be utilized by the electronic device 260 to provide an extended reality environment and the electronic device 260 utilize input and other data gathered via the one or more motion and/or orientation sensors 210A (and/or one or more microphones 213A) of the electronic device 201 as input.

In some examples, the hand tracking sensor(s) 202 (and/or other body tracking sensor(s), such as leg, torso and/or head tracking sensor(s)) can use image sensor(s) 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, one or more image sensors 206A are positioned relative to the user to define a field of view of the image sensor(s) 206A and an interaction space in which finger/hand position, orientation and/or movement captured with the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, eye tracking sensor(s) 212 includes at least one eye tracking camera (e.g., infrared (IR) cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and Configuration of FIGs. 2A-2B, but can include fewer, other, or additional components in multiple Configurations. In some examples, electronic device 201 and/or electronic device 260 can each be implemented between multiple electronic devices (e.g., as a system). In some such examples, each of (or more) electronic device may each include one or more of the same components discussed above, such as various sensors, one or more displays, one or more speakers, one or more processors, one or more memories, and/or communication circuitry. A person or persons using electronic device 201 and/or electronic device 260, is optionally referred to herein as a user or users of the device. In some examples, electronic device 201 does not include a display and electronic device 260 includes a display.

Attention is now directed towards interactions with the one or more objects in a three-dimensional environment 130. One or input devices of an electronic device (e.g., corresponding to electronic device 201) can be used to support the interactions. As described herein the interactions can include a user query (e.g., text or audio-based natural language request) and/or can include one or more images optionally including one or more images captured with cameras and/or one or more subsets of the image based on user gaze.

The present disclosure describes electronic devices and/or methods that provide technical advantages by implementing gaze-based camera switching within an interactive system. For example, detecting, via the one or more input devices, the gaze of a user directed at an object within the three-dimensional environment reduces the need for manual inputs, allowing users to control camera selection through eye movements alone, which enhances the operational efficiency of the electronic device by reducing interaction time and input errors. As another example, by detecting the direction of the user's gaze to switch camera usage, the device reduces the latency between user intent and system response, improving the device's responsiveness and processing efficiency. As yet another example, automatically aligning camera selection with the user's gaze direction ensures that the data captured and presented is highly relevant and precise, reducing data processing errors and enhancing device determinations. As yet another example, adapting camera activation and/or usage based on user gaze and predefined criteria improves resource utilization and ensures that computational power is focused on processing high-priority visual data. As yet another example, activating cameras only when necessary, based on the user's focus, promotes energy conservation by reducing power consumption, which contributes to the device's longer operational lifespan and reduced energy costs. As yet another example, detecting the user's gaze and adjusting camera settings accordingly allows for silent operation, making it useful in environments where noise is disruptive, thus expanding the practical applications of the device.

FIGs. 3A-3C illustrate examples of an electronic device extracting data corresponding to an object within a three-dimensional environment based on images captured with different camera lenses, in accordance with some examples of the disclosure.

FIG. 3A illustrates an example electronic device 101 (e.g., the electronic device described above with respect to FIGs. 1-2) optionally presenting, via a display 120, a three-dimensional environment 300 (e.g., a three-dimensional user interface). It should be understood that, in some examples, electronic device 101 utilizes one or more techniques described with reference to FIGs. 3A-3C in a two-dimensional environment without departing from the scope of the disclosure. Electronic device 101 optionally includes a display 120 (e.g., a head-mounted display) and a plurality of image sensors 114a-114c. Image sensors 114a-114c optionally include one or more of a visible light camera, an infrared camera, a depth sensor, or any other sensor electronic device 101 configured to capture one or more images of a user or a part of a user (e.g., one or more hands of the user) while the user interacts with electronic device 101. In some examples, image sensors 114a-114c may capture gestures or movements of the hand of the user, such as the act of pinching or the release thereof, as described in greater detail herein. In some examples, electronic device 101 presents the user interface or three-dimensional environment 300 to the user (and/or the three-dimensional environment 300 is visible via display 120, such as via passive and/or active passthrough), and uses sensors to detect the physical environment and/or movements of the user's hands (e.g., external sensors facing outwards from the user) such as movements that are interpreted by electronic device 101 as gestures such as air gestures, and/or gaze of the user (e.g., internal sensors facing inwards towards the face of the user). In some examples, three-dimensional environment 300 is a virtual representation of a real-world physical three-dimensional environment. Additionally and/or alternatively, three-dimensional environment 300 is presented by electronic device 101 by passing through a real-world physical environment as described above.

As shown in FIG. 3A, electronic device 101 optionally presents three-dimensional environment 300 that includes a visual representation (real-world or virtual representation) of a painting 310 (e.g., a physical or virtual painting) and a label 312 corresponding to painting 310 based on images captured with a camera fitted with a wide-angle lens (e.g., image sensor 114b). Also illustrated in FIG. 3A is gaze point 320, corresponding to the point within three-dimensional environment 300 that electronic device 101 detects the user is gazing at, and a telephoto focus 330, corresponding to a portion of three-dimensional environment 300 that a camera of electronic device 101 fitted with a telephoto lens (e.g., image sensor 114c) is focused on. For example, the wide-angle lens may be a lens which captures a broader view of the scene, while the telephoto lens may have a narrower focus, enabling it to capture a more zoomed and detailed perspective. Gaze point 320 and telephoto focus 330 are optionally presented to the user via display 120. FIG. 3A also depicts a telephoto view 332 corresponding to images captured with image sensor 114c. Telephoto view 332 is optionally overlaid on three-dimensional environment 300, as described in further detail below. In some examples, telephoto view 332 represents the view of the telephoto lens (e.g., image sensor 114c) that is not presented via display 120. In some examples, image sensor 114c is continuously active and following gaze point 320. For instance, electronic device 101 adjusts a focus point of image sensor 114c to track the determined location of gaze point 320. In some examples, image sensor 114c is active when electronic device 101 determines a quality metric (e.g., fidelity) of the images captured with the image sensor 114b or the data extracted based on said images is below a quality metric threshold (as described in further detail below). In some examples, fidelity refers to the clarity and accuracy of the images captured and/or data extracted from said images.

As used herein, a quality metric encompasses any quantitative measure of suitability of an image, an image region (e.g., a gaze-aligned region of interest), or data derived from an image for a downstream task (e.g., recognition, tracking, text parsing, and/or depth estimation). References in this disclosure to "fidelity" (including "threshold fidelity") are non-limiting examples of such a quality metric (and of a "quality metric threshold"), and the terms are optionally used interchangeably where appropriate. In some examples, fidelity is quantitatively assessed using one or more measures, such as character recognition accuracy for text within the region of interest, an error rate in transcription, signal-to-noise ratio (SNR), dynamic range, and/or pixel density (PPI). In some examples, the quality metric threshold is specified numerically, such as a character recognition accuracy of at least 90%, 95%, 98%, or 99%; an error rate below 10%, 5%, 2%, or 1%; an SNR of at least 10 dB, 20 dB, 30 dB, or 45 dB; a dynamic range of at least 25 dB, 60 dB, or 110 dB; or a pixel density of at least 100 PPI, 175 PPI, 300 PPI, or 500 PPI. In some examples, the threshold is device-calibrated and/or dynamically adjusted based on environmental conditions (e.g., illumination), object type (e.g., text), and/or distance to the object. Some examples of quality metrics include, but are not limited to, fidelity, sharpness, focus, noise, SNR, optical or lens distortion, contrast, exposure, motion, stability, scale, visibility, color, optics, compression, depth, illumination, and/or occlusion.

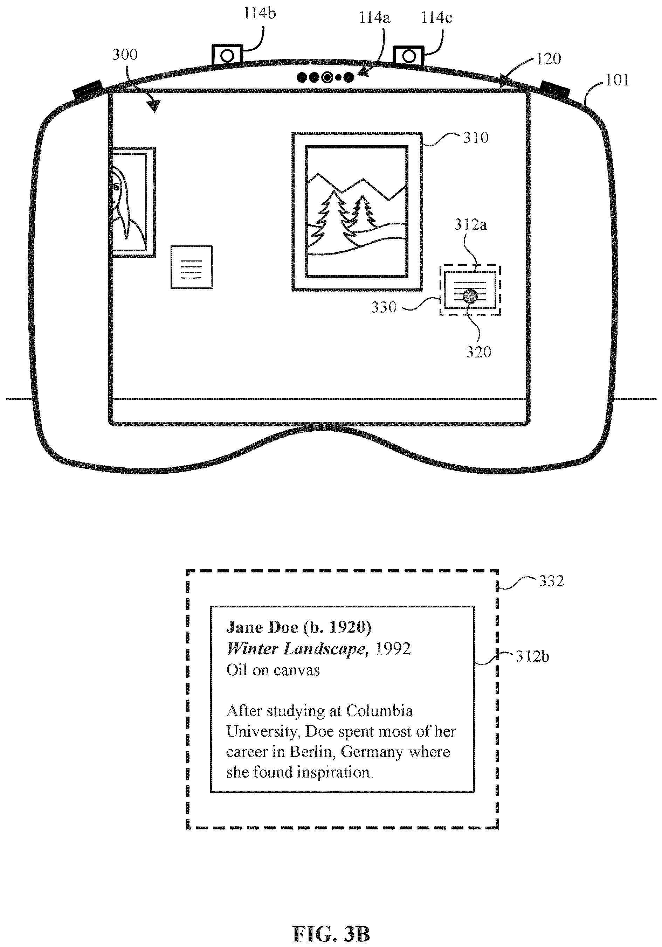

As shown in FIG. 3A, electronic device 101 detects that gaze point 320 is directed at painting 310 of three-dimensional environment 300. In some examples, electronic device 101 directs a focus of image sensor 114c to follow gaze point 320 such that telephoto focus 330 is always focused on gaze point 320 and the surrounding area. In some examples, electronic device 101 detects the user shift their gaze to label 312a, as illustrated in FIG. 3B. As shown in FIG. 3B, telephoto focus 330 follows gaze point 320 to label 312a. In some examples, telephoto focus 330 automatically adjusts (e.g., expands or contracts) to encompass the whole of label 312 in order to reduce loss of data (e.g., a portion of label 312 is not visible to the view captured with telephoto lens corresponding to image sensor 114c). In one or more examples, electronic device 101 using an image captured with the wide-angle lens (e.g., image sensor 114b), can determine that the fidelity of the image (and/or specifically label 312) is not above a pre-determined threshold (e.g., the text is not readable using the wide-angle lens). As shown in FIG. 3B, label 312a may include text in a point size that is too small for electronic device 101 and/or the user to discern based on the images captured with the wide-angle lens. However, as shown in telephoto view 332, the same text of label 312b in the same point size is legible to electronic device 101 (but optionally not to the user since telephoto view 332 may not be shown to the user at this point). Within this disclosure, references to label 312a correspond to label 312 as depicted in images captured with image sensor 114b and references to label 312b correspond to label 312 as depicted in images captured with image sensor 114c.

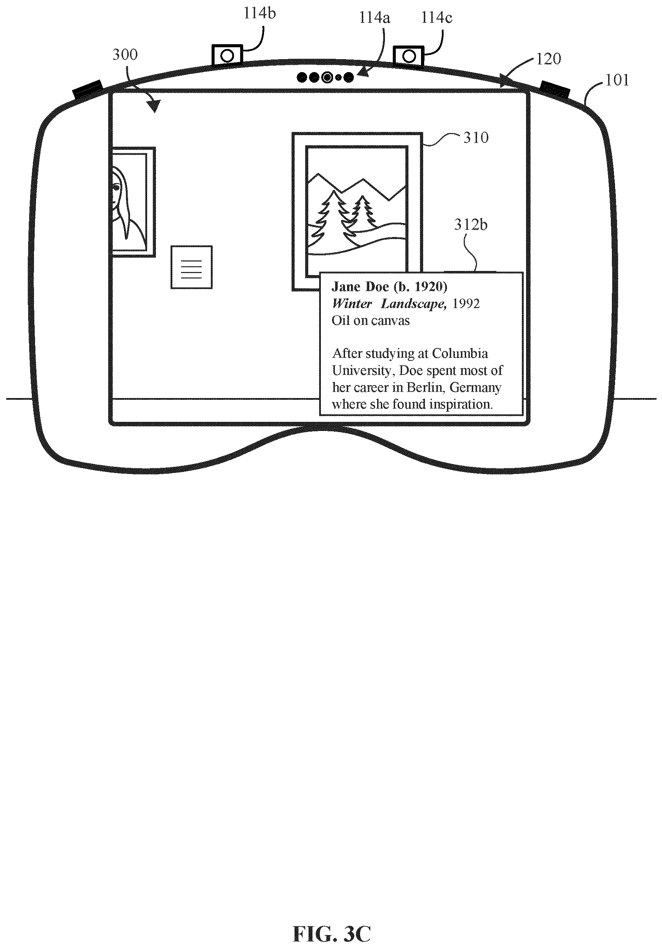

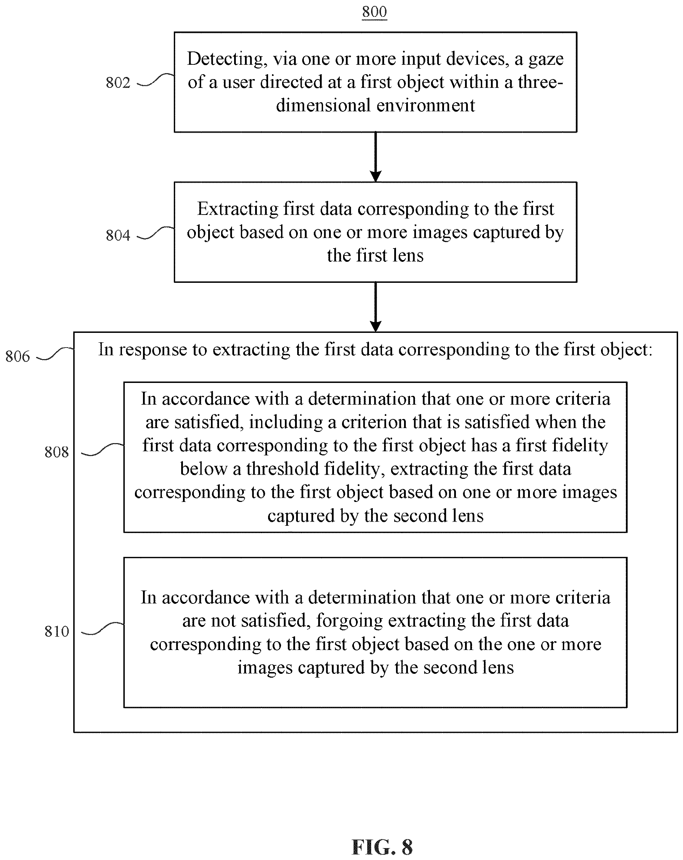

In some examples, electronic device 101 extracts data from label 312a (e.g., the text description of painting 310 found on label 312) based on the images captured with the wide-angle lens (e.g., three-dimensional environment 300). In some examples, the data extracted from label 312a based on the images captured with the wide-angle lens is incomplete or otherwise erroneous (e.g., due to the fidelity of the data being below a threshold fidelity, the point size being too small, electronic device 101 being too far from label 312a, or any other reason the text of label 312a may be illegible, such as the examples described with respect to method 800 of FIG. 8). As such, and in response to determining that the image captured with the wide-angle lens is inadequate, electronic device 101 may extract data from label 312b (e.g., the text description of painting 310 found on label 312) based on the images captured with the telephoto lens (e.g., telephoto view 332). The data extracted from label 312b may be used in a variety of applications, as described in greater detail with respect to method 800 of FIG. 8. In some examples, electronic device 101 overlays label 312b within three-dimensional environment 300 based on the images captured with the telephoto lens (e.g., telephoto view 332), as illustrated in FIG. 3C. Additionally or alternatively, electronic device 101 can present label 312b via a secondary device (e.g., electronic device 160 of FIG. 1), for example, when electronic device 101 does not include a display. In the example of FIG. 3C, a portion of three-dimensional environment 300 corresponding to label 312 is presented using the view captured with the telephoto lens, while the remaining portion is presented using the view captured with the wide-angle lens. In some examples, label 312b is overlaid such that label 312a is no longer visible to the user, without affecting the visibility of other portions of three-dimensional environment 300, such as painting 310. In some examples, electronic device 101 repositions label 312b within three-dimensional environment 300 based on one or more user inputs.

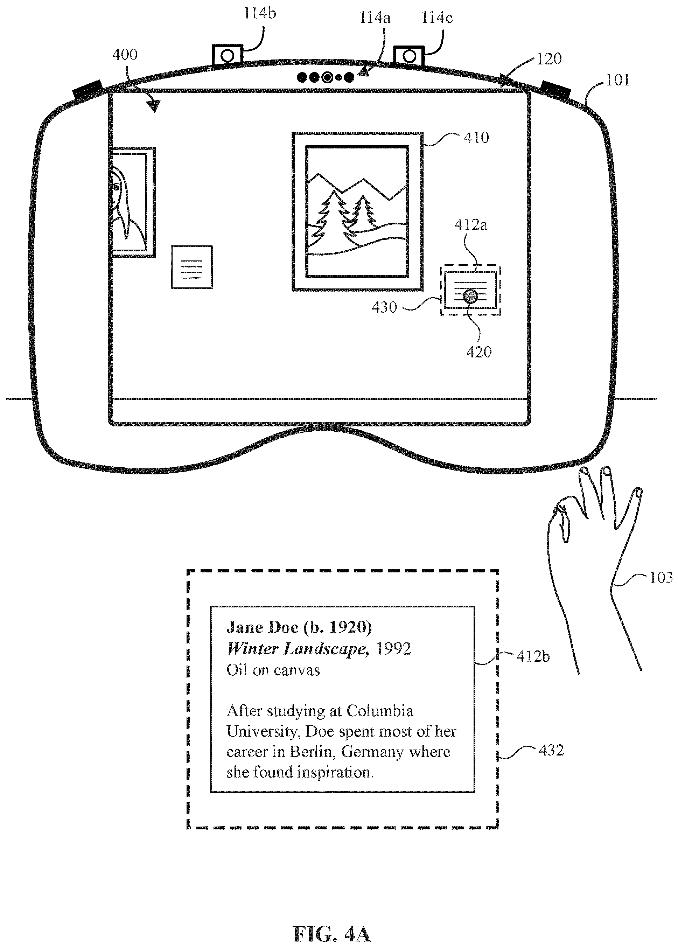

FIGs. 4A-4B illustrate examples of an electronic device extracting data corresponding to an object within a three-dimensional environment based on images captured with different camera lenses and a user input, in accordance with some examples of the disclosure.

FIG. 4A illustrates an example electronic device 101 optionally presenting, via a display 120, a three-dimensional environment 400 (e.g., a three-dimensional user interface). It should be understood that, in some examples, electronic device 101 utilizes one or more techniques described with reference to FIGs. 4A-4B in a two-dimensional environment without departing from the scope of the disclosure. Electronic device 101 optionally includes a display 120 (e.g., a head-mounted display) and a plurality of image sensors 114a-114c. In some examples, image sensors 114a-114c may capture gestures or movements of a hand 103 of the user, such as the act of pinching or the release thereof. In some examples, electronic device 101 presents the user interface or three-dimensional environment 400 to the user (and/or the three-dimensional environment 400 is visible via display 120, such as via passive and/or active passthrough), and uses sensors to detect the physical environment and/or movements of hand 103 (e.g., external sensors facing outwards from the user) such as movements that are interpreted by electronic device 101 as gestures such as air gestures, and/or gaze of the user (e.g., internal sensors facing inwards towards the face of the user).

As shown in FIG. 4A, electronic device 101 optionally presents three-dimensional environment 400 that includes a visual representation of a painting 410 (e.g., a physical or virtual painting) and a label 412a corresponding to painting 410 based on images captured with a camera fitted with a wide-angle lens (e.g., image sensor 114b). Also illustrated in FIG. 4A is gaze point 420, corresponding to the point within three-dimensional environment 400 that electronic device 101 detects the user is gazing at, and a telephoto focus 430, corresponding to a portion of three-dimensional environment 400 that a camera of electronic device 101 fitted with a telephoto lens (e.g., image sensor 114c) is focused on. Gaze point 420 and telephoto focus 430 are optionally presented to the user via display 120. FIG. 4A also depicts a telephoto view 432 with a label 412b corresponding to images captured with image sensor 114c. Telephoto view 432 is optionally overlaid on three-dimensional environment 400, as described in further detail below. In some examples, telephoto view 432 represents the view of the telephoto lens (e.g., image sensor 114c) that is not presented via display 120. Within this disclosure, references to label 412a correspond to label 412 as depicted in images captured with image sensor 114b and references to label 412b correspond to label 412 as depicted in images captured with image sensor 114c.

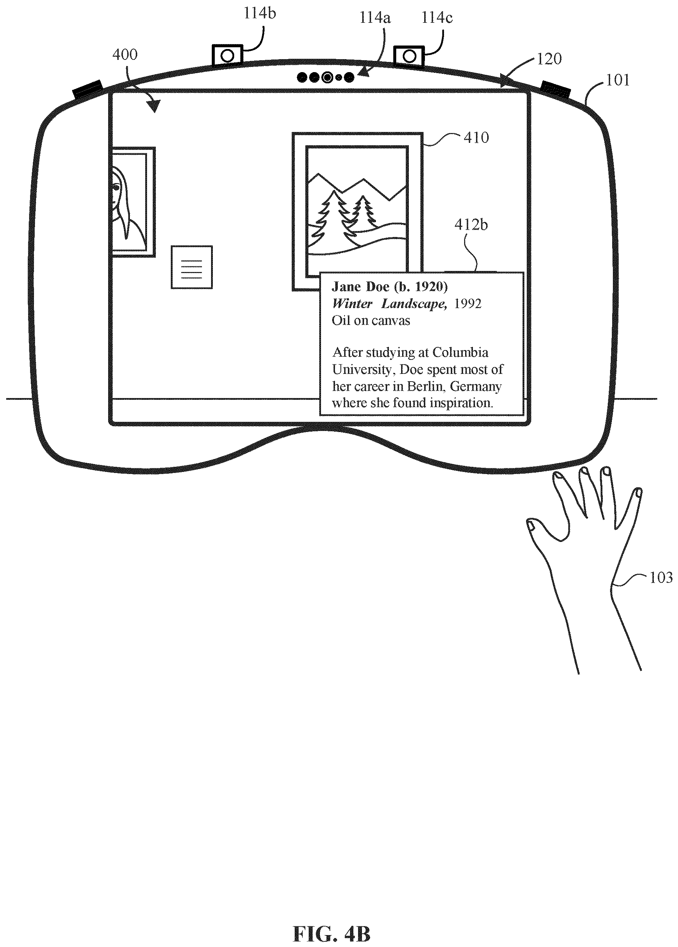

As shown in FIG. 4A, electronic device 101 detects that gaze point 420 is directed at label 412a of three-dimensional environment 400. In some examples, electronic device 101 directs a focus of image sensor 114c to follow gaze point 420 such that telephoto focus 430 is always focused on gaze point 420 and the surrounding area. In some examples, electronic device 101 automatically adjusts telephoto focus 430 (e.g., expands or contracts) to encompass the whole of label 412 to reduce loss of data (e.g., as described above). In some examples, electronic device 101 detects the user perform a gesture with hand 103 (e.g., an air pinch) while gaze point 420 is fixed on label 412a, as illustrated in FIG. 4A. In some examples, upon detecting the release of the gesture performed by hand 103 (e.g., completion of the air pinch gesture) while gaze point 420 remained on label 412a, as illustrated in FIG. 4B, electronic device 101 recognizes this input as a user request to present label 412b corresponding to the images captured with the telephoto lens (e.g., telephoto view 432 of FIG. 4A). Upon detecting the release of the gesture performed by hand 103, electronic device 101 may overlay label 412b within three-dimensional environment 400, via display 120, based on the images captured with the telephoto lens (e.g., telephoto view 432 of FIG. 4A). Additionally or alternatively, electronic device 101 can present label 412b via a secondary device (e.g., electronic device 160 of FIG. 1), for example, when electronic device 101 does not include a display. In the example of FIG. 4B, a portion of three-dimensional environment 400 corresponding to label 412 is presented using the view captured with the telephoto lens, while the remaining portion is presented using the view captured with the wide-angle lens. In some examples, label 412b is overlaid such that label 412a is no longer visible to the user, without affecting the visibility of other portions of three-dimensional environment 400, such as painting 410. In some examples, electronic device 101 repositions label 412b within three-dimensional environment 400 based on one or more user inputs. In some examples, the gesture performed by hand 103 corresponds to a user request for electronic device 101 to perform a different function (e.g., a request for further information on label 412a), as described in greater detail with respect to method 800 of FIG. 8.

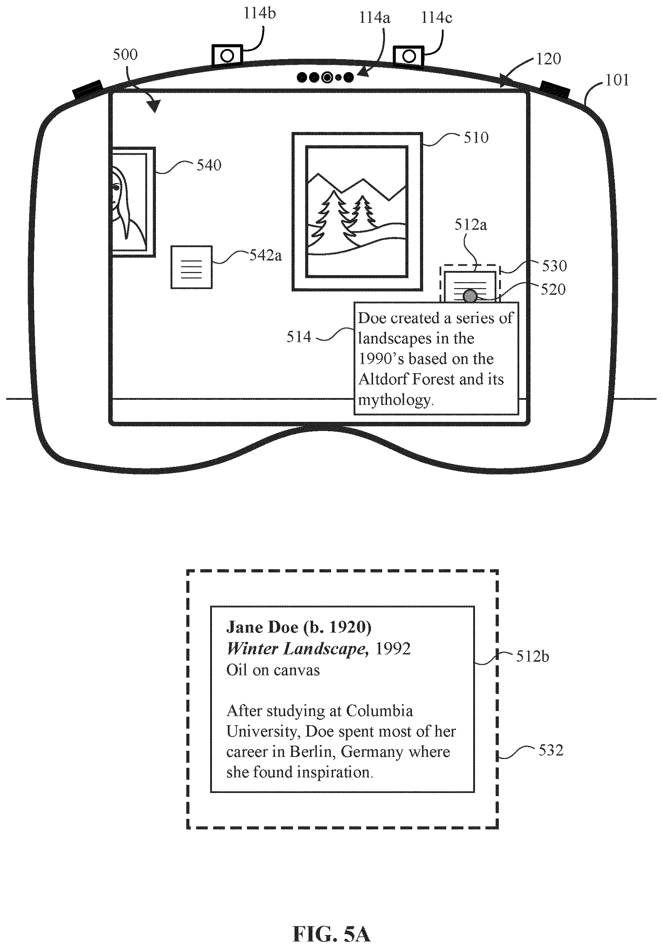

In some examples, electronic device 101 provides data extracted from an object (e.g., data extracted based on labels 312 or 412) to a large language model in order to obtain further information on said object. FIGs. 5A-5B illustrate examples of an electronic device extracting data corresponding to one or more objects within a three-dimensional environment and providing the data to a large language model, in accordance with some examples of the disclosure.

FIG. 5A illustrates an example electronic device 101 optionally presenting, via a display 120, a three-dimensional environment 500 (e.g., a three-dimensional user interface). It should be understood that, in some examples, electronic device 101 utilizes one or more techniques described with reference to FIGs. 5A-5B in a two-dimensional environment without departing from the scope of the disclosure. Electronic device 101 optionally includes a display 120 (e.g., a head-mounted display) and a plurality of image sensors 114a-114c. In some examples, electronic device 101 presents the user interface or three-dimensional environment 500 to the user (and/or the three-dimensional environment 500 is visible via display 120, such as via passive and/or active passthrough), and uses sensors to detect the physical environment and/or movements of a user's hand (e.g., external sensors facing outwards from the user) such as movements that are interpreted by electronic device 101 as gestures such as air gestures, and/or gaze of the user (e.g., internal sensors facing inwards towards the face of the user).

As shown in FIG. 5A, electronic device 101 optionally presents three-dimensional environment 500 that includes a visual representation of a painting 510 (e.g., a physical or virtual painting), a label 412a corresponding to painting 510, a painting 540, and a label 542 corresponding to painting 540 based on images captured with a camera fitted with a wide-angle lens (e.g., image sensor 114b). Also illustrated in FIG. 5A is gaze point 520, corresponding to the point within three-dimensional environment 500 that electronic device 101 detects the user is gazing at, and a telephoto focus 530, corresponding to a portion of three-dimensional environment 500 that a camera of electronic device 101 fitted with a telephoto lens (e.g., image sensor 114c) is focused on. Gaze point 520 and telephoto focus 530 are optionally presented to the user via display 120. FIG. 5A also depicts a telephoto view 532 with a label 512b corresponding to images captured with image sensor 114c. Telephoto view 532 is optionally overlaid on three-dimensional environment 500. In some examples, telephoto view 532 represents the view of the telephoto lens (e.g., image sensor 114c) that is not presented via display 120. Within this disclosure, references to label 512a correspond to label 512 as depicted in images captured with image sensor 114b and references to label 512b correspond to label 512 as depicted in images captured with image sensor 114c. In addition, within this disclosure, references to label 542a correspond to label 542 as depicted in images captured with image sensor 114b and references to label 542b correspond to label 542 as depicted in images captured with image sensor 114c.

As shown in FIG. 5A, electronic device 101 detects that gaze point 520 is directed at label 512a of three-dimensional environment 500. In some examples, electronic device 101 directs a focus of image sensor 114c to follow gaze point 520 such that telephoto focus 530 is always focused on gaze point 520 and the surrounding area. In some examples, telephoto focus 530 automatically adjusts (e.g., expands or contracts) to encompass the whole of label 512 such that no data is lost. In some examples, electronic device 101 extracts first data (e.g., the text description of painting 510 found on label 512) from either label 512a or 512b (or optionally, a combination of both). Electronic device 101 then provides the extracted data to a large language model (LLM) and obtains second data 514 from the LLM corresponding to label 512. Within the context of this disclosure, an LLM refers to an advanced artificial intelligence trained on a large number of datasets to generate human-like text based on contextual understanding. Some examples of the second data are described in greater detail with respect to method 800 of FIG. 8. In some examples, electronic device 101 overlays second data 514 obtained from the LLM within three-dimensional environment 500, via display 120, as shown in FIG. 5A. Additionally or alternatively, electronic device 101 can present second data 514 via a secondary device (e.g., electronic device 160 of FIG. 1), for example, when electronic device 101 does not include a display. In some examples, electronic device 101 initiates the process to obtain further information on label 512 and/or present the further information based on a user input (e.g., an air pinch or other gesture). In some examples, electronic device 101 initiates the process to obtain further information on label 512 and/or present the further information automatically (e.g., utilizing contextual triggers as described in greater detail with respect to method 800 of FIG. 8).

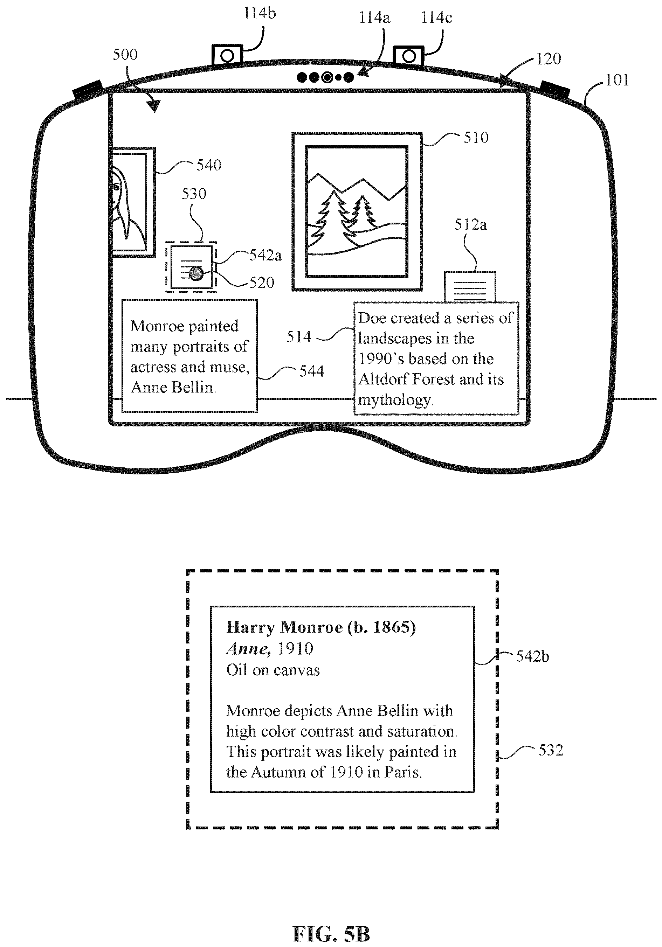

In some examples, despite gaze point 520 being directed at label 512a, electronic device 101 determines that painting 540 and/or label 542 is or may be of interest to the user (or electronic device 101 determines that label 542a includes textual information and initiates a process to provide further information automatically) and extracts first data from label 512a (e.g., the text description of painting 540 found on label 542), as shown in FIG. 5B. In some examples, upon determining that painting 540 and/or label 542 is or may be of interest to the user, electronic device 101 determines that a fidelity of the images captured with image sensor 114b or the data extracted based on said images is below a threshold fidelity. As such, electronic device 101 may focus telephoto focus 530 on label 542 such that telephoto view 532 includes a label 542b that may be clearer to electronic device 101 and/or the user than label 542a. Electronic device 101 may then extract first data from label 542b (e.g., the text description of painting 540 found on label 542). Electronic device 101 may then provide the extracted data (from label 542a and/or 542b) to an LLM and obtain second data from the LLM corresponding to label 542. Some examples of the second data are described in greater detail with respect to method 800 of FIG. 8. In some examples, electronic device 101 overlays second data 544 obtained from the LLM within three-dimensional environment 500, via display 120, as shown in FIG. 5B. Additionally or alternatively, electronic device 101 can present second data 544 via a secondary device (e.g., electronic device 160 of FIG. 1), for example, when electronic device 101 does not include a display. In some examples, electronic device 101 initiates the process to obtain further information on label 542 and/or present the further information based on a user input (e.g., an air pinch or other gesture). In some examples, electronic device 101 initiates the process to obtain further information on label 542 and/or present the further information automatically (e.g., utilizing contextual triggers as described in greater detail with respect to method 800 of FIG. 8).

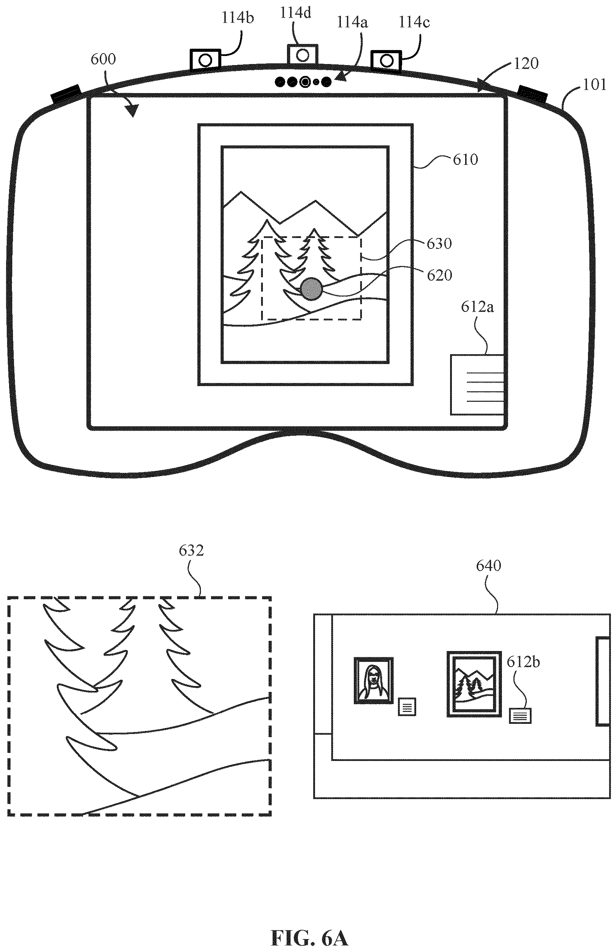

FIGs. 6A-6B illustrate examples of an electronic device extracting data corresponding to an object within a three-dimensional environment based on images captured with different camera lenses, in accordance with some examples of the disclosure.

FIG. 6A illustrates an example electronic device 101 optionally presenting, via a display 120, a three-dimensional environment 600 (e.g., a three-dimensional user interface). It should be understood that, in some examples, electronic device 101 utilizes one or more techniques described with reference to FIGs. 6A-6B in a two-dimensional environment without departing from the scope of the disclosure. Electronic device 101 optionally includes a display 120 (e.g., a head-mounted display) and a plurality of image sensors 114a-114d. In some examples, image sensor 114d has one or more characteristics of image sensors 114a-114c. In some examples, image sensor 114d is a camera fitted with a wider-angle lens than image sensors 114b and 114c. In some examples, electronic device 101 presents the user interface or three-dimensional environment 600 to the user (and/or the three-dimensional environment 600 is visible via display 120, such as via passive and/or active passthrough), and uses sensors to detect the physical environment and/or movements of the user's hands (e.g., external sensors facing outwards from the user) such as movements that are interpreted by electronic device 101 as gestures such as air gestures, and/or gaze of the user (e.g., internal sensors facing inwards towards the face of the user).

As shown in FIG. 6A, electronic device 101 optionally presents three-dimensional environment 600 that includes a visual representation of a painting 610 (e.g., a physical or virtual painting) and a label 612 corresponding to painting 610 based on images captured with a camera fitted with a wide-angle lens (e.g., image sensor 114b). Within this disclosure, references to label 612a correspond to label 612 as depicted in images captured with image sensor 114b and references to label 612b correspond to label 612 as depicted in images captured with image sensor 114d.

Also illustrated in FIG. 6A is gaze point 620, corresponding to the point within three-dimensional environment 600 that electronic device 101 detects the user is gazing at, and a telephoto focus 630, corresponding to a portion of three-dimensional environment 600 that a camera of electronic device 101 fitted with a telephoto lens (e.g., image sensor 114c) is focused on. Gaze point 620 and telephoto focus 630 are optionally presented to the user via display 120. FIG. 6A also depicts a telephoto view 632 corresponding to images captured with image sensor 114c. Telephoto view 632 is optionally overlaid on three-dimensional environment 600. In some examples, telephoto view 632 represents the view of the telephoto lens (e.g., image sensor 114c) that is not presented via display 120. In some examples, image sensor 114c is continuously active and following gaze point 620. For instance, electronic device 101 adjusts a focus point of image sensor 114c to track the determined location of gaze point 620. In some examples, image sensor 114c is active when electronic device 101 determines the fidelity of the images captured with image sensor 114b or the data extracted based on said images is below a threshold fidelity. In addition, FIG. 6A depicts a wider-angle view 640 corresponding to images captured with image sensor 114d. In some examples, images captured with image sensor 114d are used by electronic device 101 to extract data from the physical environment surrounding the user that is not visible or at least partially obstructed via image sensors 114b and/or 114c fitted with the wide-angle lens and/or the telephoto lens. In some examples, image sensor 114d is active when electronic device 101 determines an object in three-dimensional environment 600 is not visible or is at least partially obstructed.

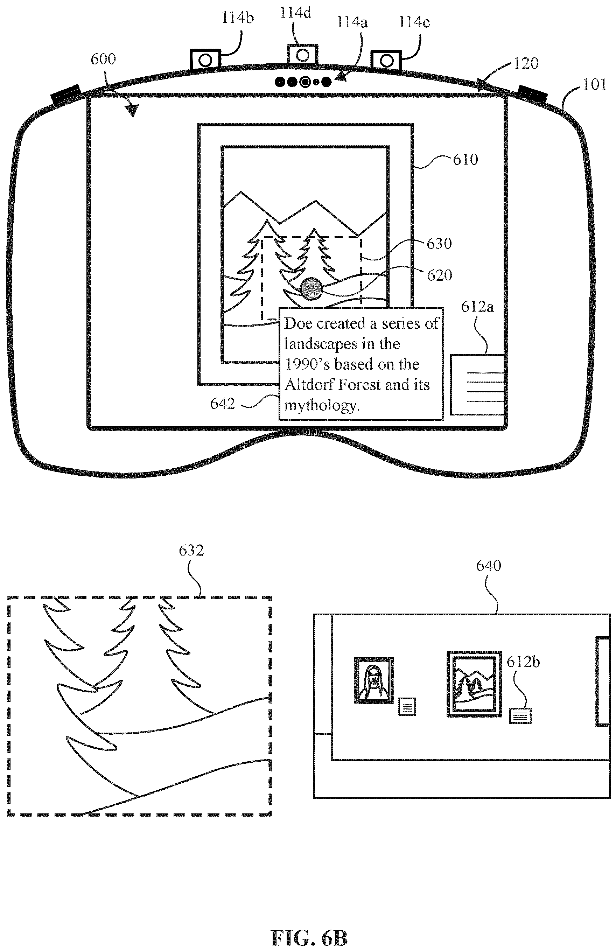

As shown in FIG. 6A, electronic device 101 detects that gaze point 620 is directed at painting 610 of three-dimensional environment 600. In some examples, and as described above, electronic device 101 directs a focus of image sensor 114c to follow gaze point 620 (e.g., by adjusting the direction and focus of the image sensor) such that telephoto focus 630 is focused on and directed to gaze point 620 and the surrounding area. As shown in FIG. 6A, the location of electronic device 101 (due to the position of the user) relative to painting 610 and label 612 is such that a portion of label 612a is not visible via the images captured with image sensor 114b (e.g., the wide-angle lens). As such, when electronic device 101 attempts to extract data from label 612a (e.g., the text description of painting 610 found on label 612), said data may be incomplete or otherwise erroneous (due to one or more portions of label 612 not being visible in the image being used to extract the data). Thus, electronic device 101 may extract data from label 612b (e.g., the text description of painting 610 found on label 612) based on the images captured with image sensor 114d (e.g., for example wider-angle view 640). The data extracted from label 612b may be used in a variety of applications, as described in greater detail with respect to method 800 of FIG. 8. For example, electronic device 101 may provide the extracted data to a large language model (LLM) and obtain second data 642 from the LLM corresponding to label 612. Some examples of the second data are described in greater detail with respect to method 800 of FIG. 8. In one or more examples, and in response to receiving data related to label 612, electronic device 101 can overlay second data 642 obtained from the LLM within three-dimensional environment 600, via display 120, as shown in FIG. 6B. Additionally or alternatively, electronic device 101 can present the second data 642 via a secondary device (e.g., electronic device 160 of FIG. 1), for example, when electronic device 101 does not include a display. In some examples, electronic device 101 initiates the process to obtain further information on label 612 and/or present the further information based on a user input (e.g., an air pinch or other gesture). In some examples, electronic device 101 initiates the process to obtain further information on label 612 and/or present the further information automatically (e.g., utilizing contextual triggers as described in greater detail with respect to method 800 of FIG. 8). In some examples, electronic device 101 overlays label 612b within three-dimensional environment 600 based on the images captured with the wider-angle lens (e.g., similar to FIG. 3C). Additionally or alternatively, electronic device 101 can present label 612b via a secondary device (e.g., electronic device 160 of FIG. 1), for example, when electronic device 101 does not include a display.

In one or more examples, if the electronic device determines that one or more of the cameras available to capture information from a three-dimensional environment is not able to view a particular image with a high enough fidelity to process the image for data extraction, then in one or more examples, the electronic device can provide instructions to the user to reposition the computing device such that the images captured with the electronic device have at least a threshold fidelity for data extraction.

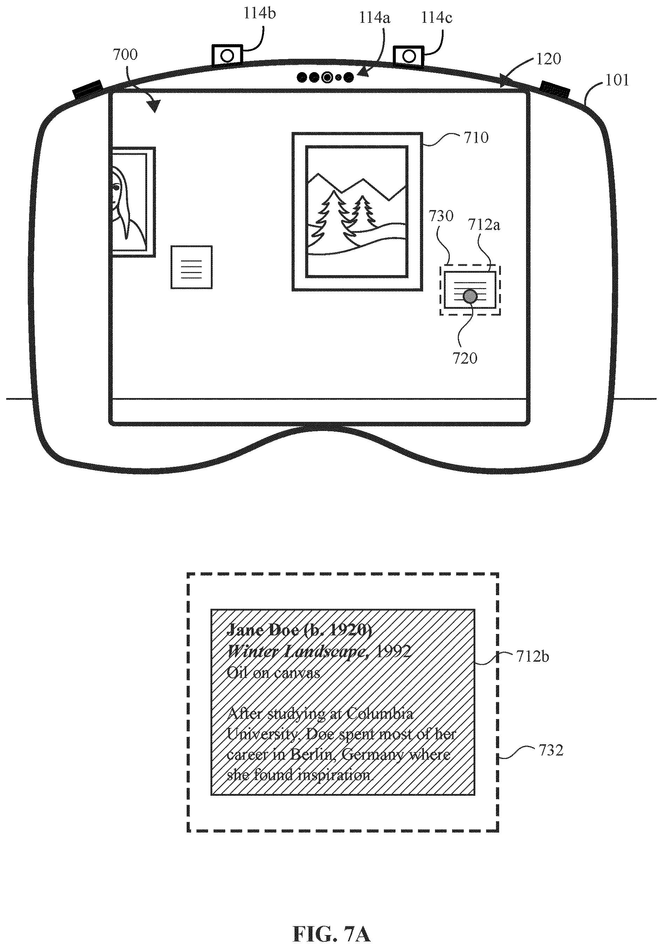

FIGs. 7A-7B illustrate examples of an electronic device providing instructions to a user to engage in actions that increase the fidelity of an image captured with a camera to aid in data extraction, in accordance with some examples of the disclosure. FIG. 7A illustrates an example electronic device 101 optionally presenting, via a display 120, a three-dimensional environment 700 (e.g., a three-dimensional user interface). It should be understood that, in some examples, electronic device 101 utilizes one or more techniques described with reference to FIGs. 7A-7B in a two-dimensional environment without departing from the scope of the disclosure. Electronic device 101 optionally includes a display 120 (e.g., a head-mounted display) and a plurality of image sensors 114a-114c. In some examples, electronic device 101 presents the user interface or three-dimensional environment 700 to the user (and/or the three-dimensional environment 700 is visible via display 120, such as via passive and/or active passthrough), and uses sensors to detect the physical environment and/or movements of a user's hand (e.g., external sensors facing outwards from the user) such as movements that are interpreted by electronic device 101 as gestures such as air gestures, and/or gaze of the user (e.g., internal sensors facing inwards towards the face of the user).

As shown in FIG. 7A, electronic device 101 optionally presents three-dimensional environment 700 that includes a visual representation of a painting 710 (e.g., a physical or virtual painting) and a label 712a corresponding to painting 710 based on images captured with a camera fitted with a wide-angle lens (e.g., image sensor 114b). Also illustrated in FIG. 7A is gaze point 720, corresponding to the point within three-dimensional environment 700 that electronic device 101 detects the user is gazing at, and a telephoto focus 730, corresponding to a portion of three-dimensional environment 700 that a camera of electronic device 101 fitted with a telephoto lens (e.g., image sensor 114c) is focused on. Gaze point 720 and telephoto focus 730 are optionally presented to the user via display 120. FIG. 7A also depicts a telephoto view 732 with a label 712b corresponding to images captured with image sensor 114c. Telephoto view 732 is optionally overlaid on three-dimensional environment 700, as described in further detail below. In some examples, telephoto view 732 represents the view of the telephoto lens (e.g., image sensor 114c) that is not presented via display 120. In some examples, image sensor 114c is continuously active and following gaze point 720. For instance, electronic device 101 adjusts a focus point of image sensor 114c to track the determined location of gaze point 720. In some examples, image sensor 114c is active when electronic device 101 determines the fidelity of the images captured with the image sensor 114b or the data extracted based on said images is below a threshold fidelity (as described in greater detail herein). Within this disclosure, references to label 712a correspond to label 712 as depicted in images captured with image sensor 114b and references to label 712b correspond to label 712 as depicted in images captured with image sensor 114c.

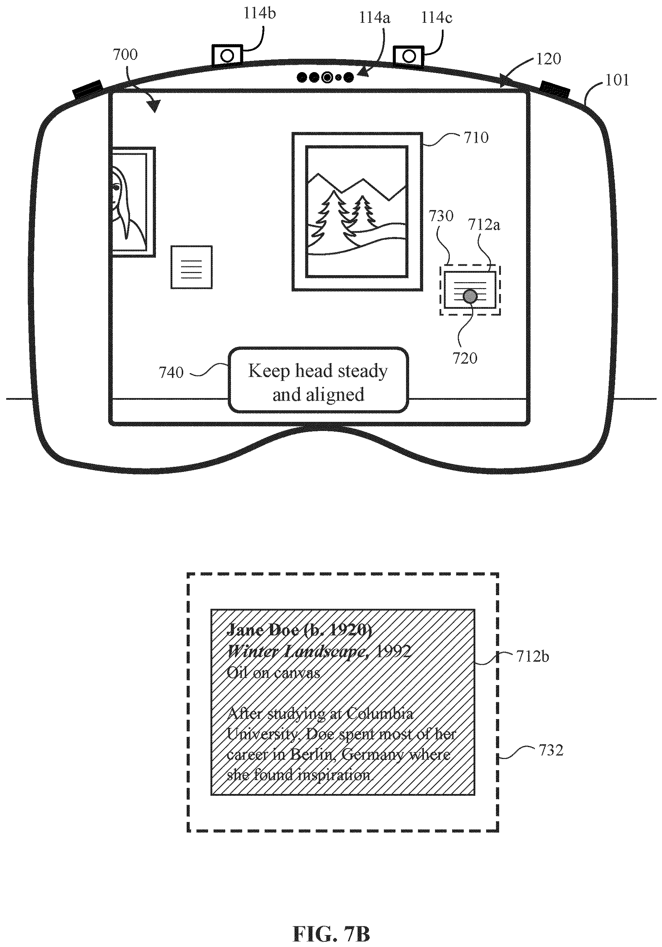

As shown in FIG. 7A, electronic device 101 detects that gaze point 720 is directed at label 712a of three-dimensional environment 700. In some examples, electronic device 101 directs a focus of image sensor 114c (e.g., the telephoto camera) to follow gaze point 720 such that telephoto focus 730 is always focused on gaze point 720 and the surrounding area. In some examples, telephoto focus 730 automatically adjusts (e.g., expands or contracts) to encompass the whole of label 712. As shown in FIG. 7A, label 712a may include text in a point size that is too small for electronic device 101 and/or the user to discern based on the images captured with the wide-angle lens of image sensor 114b. In some examples, as shown in telephoto view 732, the text of label 712b based on images captured with image sensor 114c is also illegible to electronic device 101 (e.g., because the user is not keeping electronic device 101 steady, the camera settings are wrong, the environmental conditions aren't adequate, or any of the reasons described in greater detail with respect to method 800 of FIG. 8). Therefore, when electronic device 101 attempts to extract data from either label 312a or label 312b, electronic device 101 is unsuccessful because said data may be incomplete or otherwise erroneous. As such, electronic device 101 may initiate a process to present instructions to the user that can help to enhance the fidelity of the data corresponding to label 312. For example, when electronic device 101 detects that images captured with image sensor 114c have a low resolution because it is not stable enough (as described in detail with respect to FIG. 8), electronic device 101 may present instructions 740 to the user, via display 120, to increase the stability of electronic device 101, as shown in FIG. 7B. For example, increasing stability may refer to user actions such as holding their head steadier or adjusting the headset's fit, to reduce motion of electronic device 101 and improve image clarity. Once electronic device 101 is able to extract data from label 712b that is of sufficient quality (e.g., has a fidelity greater than or equal to a threshold fidelity), electronic device 101 may cease presenting instructions 740 and may overlay label 712b within three-dimensional environment 700 based on the images captured with the telephoto lens (e.g., as illustrated in FIG. 3C) or provide the extracted data to an LLM to obtain further information on label 712 (e.g., as illustrated in FIG. 5A). Additionally or alternatively, electronic device 101 can present label 712b via a secondary device (e.g., electronic device 160 of FIG. 1), for example, when electronic device 101 does not include a display.

FIG. 8 is a flowchart illustrating an example method 800 for extracting data corresponding to an object within a three-dimensional environment based on images captured with different camera lenses, in accordance with some examples of the disclosure. In some examples, method 800 is performed at an electronic device (e.g., electronic device 101 in FIG. 1 such as a tablet, smartphone, wearable computer, or head mounted device) optionally including a display (e.g., display 120 in FIG. 1) (e.g., a heads-up display, a touchscreen, and/or a projector) and one or more cameras (e.g., a camera (e.g., color sensors, infrared sensors, and other depth-sensing cameras) that points down downward at a user's hand and/or a camera that points forward from the user's head). In some examples, method 800 is governed by instructions that are stored in a non-transitory computer-readable storage medium and that are executed by one or more processors of an electronic device, such as the one or more processors 218A of electronic device 101. Some operations in method 800 are, optionally, combined and/or the order of some operations is, optionally, changed.

In some examples, method 800 is performed at an electronic device in communication with one or more input devices, including a first camera with a first lens and a second camera with a second lens, wherein the first lens corresponds to a first lens type and the second lens corresponds to a second lens type, different from the first lens type. In some examples, the electronic device is or includes an electronic device, such as a mobile device (e.g., a tablet, a smartphone, a media player, or a wearable device), or a computer. In some examples, the one or more input devices include an electronic device or component capable of receiving a user input (e.g., capturing a user input or detecting a user input) and transmitting information associated with the user input to the electronic device. Examples of input devices include an image sensor (e.g., a camera), location sensor, hand tracking sensor, eye-tracking sensor, motion sensor (e.g., hand motion sensor), orientation sensor, microphone (and/or other audio sensors), touch screen (optionally integrated or external), remote control device, another mobile device (e.g., separate from the electronic device), a handheld device, and/or a controller. In some examples, a camera refers to a digital imaging device capable of capturing still images, video, or both. In some examples, a lens refers to an optical component made from transparent material, shaped to focus or disperse light, and used in conjunction with an image sensor to capture images. In some examples, a lens type refers to a classification of a lens based on its optical characteristics and/or intended use. In some examples, the lens type is determined by one or more characteristics of a lens, such as its focal length, aperture size, and/or field of view. Some examples of lens types include, but are not limited to, wide-angle lenses (e.g., for a broader field of view), telephoto lenses (e.g., long focal length to magnify distant subjects), prime lenses (e.g., for a fixed focal length), zoom lenses (e.g., for variable focal lengths), macro lenses (e.g., for close-ups), fish-eye lenses (e.g., for an ultra-wide-angle), tilt-shift lenses (e.g., for plane of focus adjustments), mirror lenses (e.g., for long focal lengths at smaller sizes), or anamorphic lenses (e.g., for wider images). In some examples, the first and second cameras refer to two separate digital imaging devices within the electronic device, each equipped with its own lens and/or sensor setup. For example, the first camera may be equipped with a wide-angle lens and the second camera may be equipped with a telephoto lens, as described in greater detail herein. In some examples, the first and second cameras are physically integrated into a single unit with the capability to switch lenses.

In some examples, a three-dimensional environment is generated, presented, or otherwise caused to be viewable by the electronic device or a device in communication with the electronic device. For example, the three-dimensional environment may be an extended reality (XR) environment, such as a virtual reality (VR) environment, a mixed reality (MR) environment, or an augmented reality (AR) environment. In some examples, the three-dimensional environment at least partially or entirely includes the physical environment of the user of the electronic device. For example, the electronic device optionally includes one or more outward facing cameras (e.g., the first and/or second cameras) and/or passive optical components (e.g., the first and/or second lenses, panes or sheets of transparent materials, and/or mirrors) configured to allow the user to view the physical environment and/or a representation of the physical environment (e.g., images and/or another visual reproduction of the physical environment). In some examples, the three-dimensional environment includes one or more virtual objects and/or representations of objects in a physical environment of the user of the electronic device. In some examples, the electronic device supports user interaction with physical or virtual objects through natural user gestures and/or movements, such as air gestures, touch gestures, gaze-based gestures, or the like. In some examples, presenting the three-dimensional environment refers to the process by which the three-dimensional environment is made available or accessible to a user. In some examples, the three-dimensional environment is made available to the user by a device or system different from the electronic device, thereby obviating the need for the electronic device to generate the visual, auditory, and/or haptic output associated with the three-dimensional environment. In some examples, the electronic device is configured to coordinate with external devices (e.g., virtual reality headsets, projectors, or other display technologies), which perform the task of visualizing the three-dimensional environment to the user.

In some examples, electronic device 101 detects (802), via the one or more input devices, a gaze of a user directed at a first object within the three-dimensional environment, such as electronic device 101 detecting gaze point 320 directed at label 312a in FIG. 3B. In some examples, the gaze of the user refers to the direction and/or focus of the user's eyesight as detected and interpreted by the system. In some examples, detecting the gaze of the user involves tracking where the user is looking within the three-dimensional environment, facilitated by one or more sensors or cameras that monitor eye movement, pupil orientation, and/or head direction. In some examples, the first object refers to any item, element, or feature within the three-dimensional environment that may be the focus of the gaze of the user at any given moment. In some examples, the first object is distinguishable from the background or other elements within the environment by one or more of its characteristics or its relevance to the user's interaction. Some examples of objects include, but are not limited to, real-world items/features (e.g., furniture, stairs, walls), user interface elements (e.g., buttons, sliders, menus), virtual entities (e.g., avatars or creatures), geometric shapes (e.g., basic shapes like cubes, spheres, or cones), symbols and/or signs (e.g., icons or arrows), tools and/or instruments, or any item or feature that can be interacted with or focused upon. In some examples, detecting the gaze of the user directed at the first object refers to the process by which the electronic device identifies that the user is looking at or is focused on the first object within the three-dimensional environment.

In some examples, electronic device 101 extracts (804) first data corresponding to the first object based on the one or more images captured with the first lens, such as electronic device 101 employing character recognition techniques to identify text in label 312a based on one or more images captured with image sensor 114b in FIG. 3B. In some examples, the first data refers to information derived from or representing the first object within the three-dimensional environment. Some examples of data corresponding to the first object include, but are not limited to, visual characteristics (e.g., color information, texture details, shape and size dimensions, and/or visual patterns), textual content (e.g., text labels and/or numerical data), symbols and/or icons, barcodes or quick response (QR) codes, spatial attributes (e.g., position coordinates within the environment, orientation and alignment relative to other objects or the user, and/or depth information), temporal details (e.g., time of data capture and/or movement or changes over time), metadata (e.g., source camera, sensor information, environmental conditions at time of capture, and/or user-specific data such as gaze direction at time of interaction), interactive properties (e.g., possible interactions, responses to user actions), and/or any type of data that may be visually captured and processed to provide information on the first object. In some examples, extracting data refers to the process of identifying and isolating specific data from a larger set of data or from within a complex environment. For example, extracting data may involve the use of computational methods to analyze and retrieve relevant information from captured images, sensor data, or other inputs. In some examples, extracting data involves the use of image processing techniques such as optical character recognition (OCR) to identify and convert text found in images into machine-readable text. In some examples, extracting data involves utilizing pattern recognition algorithms to detect and isolate specific symbols, icons, or graphical elements within images.

In some examples, in response to extracting the first data corresponding to the first object (806), in accordance with a determination that one or more criteria are satisfied, including a criterion that is satisfied when the first data corresponding to the first object has a first quality metric below a quality metric threshold, electronic device 101 extracts (808) the first data corresponding to the first object based on one or more images captured with the second lens, such as electronic device 101 employing character recognition techniques to identify text in label 312b based on one or more images captured with image sensor 114c in FIG. 3B, in accordance with a determination that data extracted from label 312a has a fidelity below a threshold fidelity. In some examples, the one or more criteria refer to a set of predefined conditions or thresholds that must be met or evaluated to determine the subsequent actions of the system. Some example criteria include, but are not limited to, fidelity checks (e.g., evaluating if the data's resolution meets a minimum quality threshold for legibility or detail), text clarity (e.g., evaluating the clarity of text extracted from an image to determine if a higher resolution or point size is needed), detail visibility (e.g., evaluating whether fine details on the first object are visible enough for analysis or interaction), depth of field adequacy (e.g., evaluating whether the depth of field is appropriate for capturing one or more details of the object), color distortion (e.g., evaluating whether there are any color distortions that affect the identification or interpretation of the object), distance to the object (e.g., evaluating whether the user's distance to the first object requires the use of a different camera), object type (e.g., evaluating whether the first object's type requires the use of a different camera), user focus duration (e.g., evaluating how long a user focuses on an object to infer interest or importance), background distraction (e.g., evaluating the level of distraction in the background that might affect the object's visibility), previous user interactions (e.g., evaluating past interactions with similar objects to predict current processing needs), or any other criterion geared towards evaluating the quality and suitability of the captured data to facilitate a decision on whether switching to a different camera lens may yield better results. In some examples, fidelity refers to the degree of exactness with which the electronic device reproduces the characteristics or details of an object (e.g., the first object) within the three-dimensional environment. For example, high fidelity indicates a close approximation to the real-world appearance and/or behavior of the object, while low fidelity indicates a less accurate approximation. In some examples, the first fidelity includes one or more of the resolution, clarity, and/or accuracy of visual representations in the extracted first data. In some examples, threshold fidelity refers to a predefined level of detail or accuracy that must be met or exceeded for the data to be considered adequate for a specific application or purpose, such as determining which camera to use. In some examples, the threshold fidelity is set based on a minimum resolution or clarity needed to effectively interact with or analyze the first object or a characteristic of the first object within the three-dimensional environment. In some examples, fidelity is quantitatively assessed using metrics such as character recognition accuracy, text clarity, error rates in transcription, signal-to-noise ratio (SNR), dynamic range, or pixel density (PPI). Some examples of values for the threshold fidelity include, but are not limited to, a character recognition accuracy of at least 85%, 88%, 90%, 95%, 98%, 99%, or 100%; an error rate in transcription below 1%, 2%, 5%, 7%, or 10%; a signal-to-noise ratio of at least 2 dB, 5 dB, 10 dB, 20 dB, 30 dB, 45 dB, 65 dB, or 100 dB; a dynamic range of 5 dB, 10 dB, 25 dB, 60 dB, 110 dB, or 150 dB; or a pixel density of 30 PPI, 50 PPI, 100 PPI, 175 PPI, 300 PPI, 500 PPI, 750 PPI, or 1000 PPI. In some examples, the threshold fidelity is set depending on the user's needs (e.g., eyesight requirements) or the specific task at hand (e.g., text processing). In some examples, the threshold fidelity is dynamically adjusted based on contextual factors (e.g., environmental lighting, complexity of the first object, user's perceptual abilities). In some examples, extracting the first data corresponding to the first object based on one or more images captured with the second lens upon determining that the first fidelity is below the threshold fidelity refers to the process by which the system switches to using the second camera equipped with a different lens from the first camera when the data quality from the first camera falls below the predefined threshold fidelity. In some examples, extracting the first data corresponding to the first object based on one or more images captured with the second lens involves capturing new images of the first object with the second lens. In some examples, the second camera captures the one or more images captured with the second lens concurrently with the first camera capturing the one or more images captured with the first lens. In some examples, extracting the first data corresponding to the first object based on one or more images captured with the second lens has one or more characteristics of extracting the first data corresponding to the first object based on one or more images captured with the first lens. In some examples, the first data refers to certain data representing the first object, irrespective of which lens or camera captures the images.

In some examples, in response to extracting the first data corresponding to the first object (806), in accordance with a determination that the one or more criteria are not satisfied, electronic device 101 forgoes extracting (810) the first data corresponding to the first object based on the one or more images captured with the second lens, such as electronic device 101 forgoing employing character recognition techniques on label 312b based on one or more images captured with image sensor 114c in FIG. 3B, in accordance with a determination that data extracted from label 312a has a fidelity equal to or above a threshold fidelity. In some examples, forgoing extracting the first data corresponding to the first object based on the one or more images captured with the second lens refers to the decision by the electronic device not to initiate data extraction from images captured with the second lens when the fidelity from the first lens meets or exceeds the predetermined threshold fidelity. In some examples, when the one or more images captured with the first lens are found to have a fidelity that is above the threshold, the system avoids redundancy and conserves computational resources by not capturing any images with the second lens.

In some examples, the first lens type corresponds to a wide-angle lens, such as image sensor 114b in FIGs. 3A-7B, which is fitted with a wide-angle lens. In some examples, the wide-angle lens refers to a type of camera lens that has a shorter focal length (e.g., 1 mm, 3 mm, 5 mm, 10 mm, 15 mm, 20 mm, 35 mm, or 50 mm) and a wider field of view (e.g., 50°, 60°, 75°, 90°, 110°, 130°, 150°, or 180°) compared to standard lenses. In some examples, the wide-angle lens allows the electronic device to capture a broader perspective of the physical environment surrounding the user.

In some examples, the second lens type corresponds to a telephoto lens, such as image sensor 114c in FIGs. 3A-7B, which is fitted with a telephoto lens. In some examples, the telephoto lens refers to a type of camera lens that has a longer focal length (e.g., 50 mm, 65 mm, 85 mm, 120 mm, 170 mm, 240 mm, 320 mm, or 400 mm) and a narrower field of view (e.g., 1°, 3°, 5°, 10°, 20°, 30°, or 40°) than a standard lens, allowing the electronic device to magnify distant subjects.

In some examples, the one or more criteria include a criterion that is satisfied when the first object is a first type of object, such as painting 310 and label 312 being different types of objects in FIGs. 3A-3C. In some examples, an object type refers to a classification assigned to objects within the three-dimensional environment based on one or more of their characteristics, functions, and/or roles. Some examples of object types include, but are not limited to, objects characterized by textual content (e.g., objects where text is a primary feature, such as documents, labels, signs, or interfaces), fine details (e.g., objects that contain intricate details critical for their function or aesthetic value, such as mechanical devices or detailed artwork), patterns (e.g., objects with distinctive patterns that require precise rendering to be accurately represented, such as barcodes or QR codes), or textures (e.g., objects where texture is a significant attribute, such as fabrics or natural surfaces). In some examples, the criterion being satisfied based on the object type refers to the electronic device having predefined settings or responses that are triggered when it identifies that the first object belongs to a specific category or type. In some examples, upon determining the first object is the first type of object, the electronic device extracts the first data based on the one or more images captured with the second lens. For example, when the system determines the first object is an object characterized by textual content, it may extract data based on images captured with the second lens to ensure clarity and legibility of the text. Additionally or alternatively, the system may engage text-enhancement algorithms or other higher resolution settings associated with textual content.

In some examples, the first type of object includes text, such as label 312 in FIGs. 3A-3C. In some examples, text refers to a collection of characters, symbols, or numbers that convey information or data in a written format. In some examples, text appears as part of a physical object (e.g., documents, labels, or signs) or a user interface (e.g., within software of the electronic device or on digital displays within the physical environment). In some examples, the first type of object including text refers to text being a component or feature of the first type of object. In some examples, optical character recognition (OCR) algorithms are applied to the image data to accurately detect and interpret the presence of text within the visual content captured with the camera.

In some examples, the one or more criteria include a criterion that is satisfied when the text has a first point size smaller than a point size threshold, such as label 312a having a text point size smaller than a legibility point size threshold in FIGs. 3A-3C. In some examples, point size refers to the measure of the size of characters in a piece of text. In some examples, a point is a unit of length defined as 1/72 of an inch. In some examples, the point size threshold refers to a predefined minimum size of text, measured in points, that the electronic device uses as a benchmark to trigger specific processing actions, such as determining from which images to extract the first data. In some examples, the point size threshold is set based on the minimum text size that can be accurately captured and processed by the system under normal operating conditions or based on the minimum text size required for user legibility. For example, the point size threshold may be 1 point, 2 points, 5 points, 10 points, 15 points, 20 points, 50 points, or 100 points. In some examples, the point size threshold is dynamically adapted based on contextual factors, such as ambient lighting conditions or distance of the text from the camera.

In some examples, while presenting the three-dimensional environment, electronic device 101 detects a first input corresponding to a request to enlarge the first object, such as electronic device 101 detecting the user input performed by hand 103 (e.g., an air pinch) in FIGs. 4A-4B. In some examples, detecting the first input corresponding to a request to enlarge the first object refers to detecting a user-initiated command signaling the system to increase the size or scale of the visual representation of the first object within the three-dimensional environment. Some examples of inputs that may correspond to a request to enlarge the first object include, but are not limited to, touch gestures (e.g., a pinch-to-zoom on a touchscreen interface), air gestures (e.g., an air pinch-to-zoom while the user's gaze is focused on the first object), keyboard shortcuts, voice commands, eye blink patterns, or any other input that conveys to the system that the user wishes to enlarge the first object.

In some examples, in response to detecting the first input, electronic device 101 extracts the first data corresponding to the first object based on the one or more images captured with the second lens, such as electronic device 101 extracting data (e.g., employing character recognition techniques) corresponding to label 412b based on one or more images captured with the telephoto lens of image sensor 114c in response to detecting the input performed by hand 103 in FIGs. 4A-4B. In some examples, in response to detecting the first input, electronic device 101 initiates a process to present an overlay of a portion of the first object based on the one or more images captured with the second lens, such as electronic device 101 presenting, via display 120, an overlay of label 412b based on one or more images captured with the telephoto lens of image sensor 114c in response to detecting the input performed by hand 103 in FIGs. 4A-4B. In some examples, the process to present the overlay of the portion of the first object involves a sequence of operations where the system overlays an enhanced or enlarged view of at least a portion of the first object over the existing view in the three-dimensional environment. In some examples, the overlay is based on the one or more images captured with the second lens. In some examples, initiating the process to present the overlay involves generating and sending instructions to a separate display device to perform the task of overlaying the enhanced image. In some examples, initiating the process to present the overlay involves storing the extracted first data corresponding to the first object based on the one or more images captured with the second lens for later use.

In some examples, the one or more criteria include a criterion that is satisfied in accordance with a determination that the first object is at a first distance from the electronic device that is further than a threshold distance from the electronic device within the three-dimensional environment, such as electronic device 101 determining that label 312 is at a distance from the user and/or electronic device 101 that is further than a threshold distance within three-dimensional environment 300 in FIGs. 3A-3C. In some examples, the first distance from the electronic device refers to the measured spatial separation between the electronic device and the first object within the three-dimensional environment. In some examples, the threshold distance refers to a predefined spatial limit set within the system that determines when specific actions or changes in processing should be triggered based on the distance from the electronic device to the first object within the three-dimensional environment. For example, the threshold distance may be 0.5 m, 1 m, 3 m, 5 m, 10 m, 15 m, 25 m, or 50 m. In some examples, the distance between the electronic device and the first object is measured using depth-sensing technologies such as infrared sensors, ultrasonic sensors, stereo vision cameras, or Light Detecting and Ranging (LIDAR), integrated within the electronic device.

In some examples, while presenting the three-dimensional environment, in accordance with the determination that the one or more criteria are satisfied, including the criterion that is satisfied when the first data corresponding to the first object has the first quality metric below the quality metric threshold, and upon extracting the first data corresponding to the first object based on the one or more images captured with the second lens, electronic device 101 initiates a process to present an overlay of a portion of the first object based on the one or more images captured with the second lens, such as electronic device 101 presenting, via display 120, an overlay of label 312b based on one or more images captured with the telephoto lens of image sensor 114c when electronic device 101 determines that data extracted from label 312a has a fidelity below a threshold fidelity in FIG. 3C. In some examples, the process to present the overlay of the portion of the first object involves a sequence of operations where the system overlays an enhanced or enlarged view of at least a portion of the first object over the existing view in the three-dimensional environment. In some examples, the overlay is based on the one or more images captured with the second lens, which are likely to provide higher fidelity than the images captured with the first lens. In some examples, initiating the process to present the overlay involves generating and sending instructions to a separate display device to perform the task of overlaying the enhanced image. In some examples, initiating the process to present the overlay involves storing the extracted first data corresponding to the first object based on the one or more images captured with the second lens for later use.

In some examples, initiating the process to present the portion of the first object based on the one or more images captured with the second lens includes sending instructions to a display to superimpose an enlarged representation of the portion of the first object over a corresponding location of the first object within the three-dimensional environment, such that the enlarged representation appears magnified from the viewpoint of the user, such as electronic device 101 sending instructions to display 120 to superimposed an enlarged representation of label 312b over the location of label 312a within three-dimensional environment 300 in FIG. 3C. In some examples, the display refers to a device or system module capable of rendering visual content for user interaction based on data received from the electronic device. In some examples, sending instructions to the display to superimpose the enlarged representation of the portion of the first object over the corresponding location of the first object involves transmitting data from the electronic device dictating that the display overlay an enlarged version of at least a portion of the first object over its actual position within the three-dimensional environment. In some examples, superimposing the enlarged representation of the portion of the first object refers to overlaying said enlarged digital representation directly atop the location of the first object within the three-dimensional environment, integrating the magnified image so that it appears as an extension of the original scene from the user's perspective.

In some examples, after extracting the first data corresponding to the first object, electronic device 101 obtains further information on the first object, including providing the first data corresponding to the first object to a large language model (LLM), obtaining second data corresponding to the first object from the LLM, the second data corresponding to the first object and being different from the first data corresponding to the first object, and initiating a process to present, the second data corresponding to the first object. For example, as illustrated in FIGs. 5A-5B, electronic device 101 provides the data extracted from label 312 to an LLM, obtains further information (e.g., second data 514) corresponding to label 312 (and/or painting 310) from the LLM, and presents, via display 120, further information (e.g., second data 514) within three-dimensional environment 500. In some examples, an LLM refers to an artificial intelligence system trained on vast amounts of textual data to understand and generate text based on input it receives. In some examples, providing the first data to the LLM involves transmitting or making accessible specific data extracted from the first object to the LLM, such as textual, numerical, image, audio, video, or other data that the LLM may comprehend.

In some examples, the second data refers to the enriched, expanded, or enhanced information generated by the LLM based on the first data provided to it. In some examples, the second data includes insights, contextual information, or any additional details that complement or augment the original data extracted from the first object. In some examples, the second data obtained from the LLM includes one or more elements common to the first data. In some examples, the second data obtained from the LLM does not include any elements included in the first data. In some examples, the first data does not include any elements included in the second data.

In some examples, the process to present the second data corresponding to the first object involves a sequence of operations where the system overlays a visual representation of the second data over the existing view in the three-dimensional environment. In some examples, initiating the process to present the second data involves generating and sending instructions to a separate display device to perform the task of overlaying the second data. In some examples, initiating the process to present the second data involves storing the second data corresponding to the first object for later use.

In some examples, obtaining further information on the first object is performed in response to detecting, via the one or more input devices, a first input corresponding to a request for the second data corresponding to the first object, such as electronic device 101 obtaining further information (e.g., second data 514) in response to detecting a user input (e.g., an air pinch performed by hand 103 of FIGs. 4A-4B) corresponding to a request for further information on label 512 in FIG. 5A. In some examples, the first input corresponding to the request for the second data refers to a user-initiated action that specifically signals the system to retrieve or generate additional information about the first object. Some examples of the type of inputs that can be detected by the electronic device include, but are not limited to, interactions with a user interface (e.g., interacting with a button or icon associated with further information), voice commands, air gestures, or context-sensitive actions (e.g., gazing at the first object for longer than a predetermined amount of time).

In some examples, obtaining further information on the first object is performed automatically without an input from the user, such as electronic device 101 automatically obtaining further information (e.g., second data 514) without detecting a user input (e.g., based on specific rules or policies, or by analyzing the user's gaze or past actions concerning label 512 or similar objects). In some examples, obtaining further information on the first object automatically without user input refers to the electronic device's capability to initiate and execute the process of generating or retrieving additional information about the first object based on predetermined criteria, settings, or algorithms, independent of explicit user commands or actions. In some examples, the electronic device utilizes contextual triggers to automatically obtain the further information, such as the user's dwell time on the first object (e.g., by analyzing the user's gaze on the first object), the first object's importance within the context of the environment (e.g., determining importance based on factors such as a frequency of user interactions with the first object or its classification as a high-priority item in a system database), specific rules or policies (e.g., the first object being detected for the first time or the first object being part of a curated set of objects), environmental or situational changes (e.g., the user approaching a specific area or object), or previous interactions with similar objects.

In some examples, obtaining further information on the first object includes extracting first data corresponding to a second object, different from the first object, based on the one or more images captured with the first lens or the one or more images captured with the second lens, such as electronic device 101 extracting data corresponding to label 542 based on one or more images captured with the wide-angle lens of image sensor 114b or the telephoto lens of image sensor 114c in FIG. 5B. In some examples, the second object has one or more characteristics of the first object. In some examples, the first data corresponding to the second object has one or more characteristics of the first data corresponding to the first object. In some examples, extracting the first data corresponding to the second object based on the one or more images captured with the first lens or the second lens has one or more characteristics of extracting the first data corresponding to the first object based on the one or more images captured with the first lens or the second lens. In some examples, the electronic device does not detect the gaze of the user being directed at the second object before extracting the first data corresponding to the second object.

In some examples, obtaining further information on the second object includes providing the first data corresponding to the second object to the LLM, such as providing the extracted data corresponding to label 542 to an LLM in FIG. 5B. In some examples, providing the first data corresponding to the second object to the LLM has one or more characteristics of providing the first data corresponding to the first object to the LLM.

In some examples, obtaining further information on the second object includes obtaining second data corresponding to the second object from the LLM, the second data corresponding to the second object and being different from the first data corresponding to the second object, such as electronic device 101 obtaining further information (e.g., second data 544) corresponding to label 542 from the LLM in FIG. 5B. In some examples, obtaining second data corresponding to the second object from the LLM has one or more characteristics of obtaining second data corresponding to the first object from the LLM.

In some examples, obtaining further information on the second object includes initiating a process to present the second data corresponding to the second object, such as electronic device 101 presenting, via display 120, further information (e.g., second data 544 in FIG. 5B). In some examples, initiating the process to present the second data corresponding to the second object has one or more characteristics of initiating the process to present the second data corresponding to the first object.

In some examples, the one or more input devices include a third camera with a third lens, the third lens having a wider field of view than the first lens and the second lens, such as electronic device 101 including image sensor 114d fitted with the wider-angle lens in FIGs. 6A-6B. In some examples, the third lens having a wider field of view than the first and second lenses refers to the extent of the observable area captured with the third lens being larger than the extent of the observable area captured with the first or second lenses. For example, the third lens's field of view may be 100°, 110°, 125°, 150°, 180°, 210°, 260°, 310°, or 360°.

In some examples, in response to extracting the first data corresponding to the first object, in accordance with a determination that a respective set of one or more criteria are satisfied, including a criterion that is satisfied when the first object is at a first distance from the electronic device closer than a threshold distance from the electronic device within the three-dimensional environment, electronic device 101 extracts the first data corresponding to the first object based on one or more images captured with a third lens, such as electronic device 101 extracting data corresponding to label 612b based on one or more images captured with image sensor 114d in FIGs. 6A-6B when the user and/or electronic device 101 is at a distance from label 612a that is closer than a threshold distance within three-dimensional environment 600. In some examples, the criterion that is satisfied when the first object is at the first distance from the electronic device closer than the threshold distance refers to a condition within the system that is met when the measured distance between the electronic device and the first object is less than a predetermined threshold (e.g., 0.1 m, 0.3 m, 0.5 m, 1 m, 2 m, or 5 m) within the three-dimensional environment. In some examples, the distance between the electronic device and the first object is measured using depth-sensing technologies, such as infrared sensors, ultrasonic sensors, stereo vision cameras, or LIDAR, integrated within the electronic device.

In some examples, in accordance with a determination that the one or more criteria are not satisfied, electronic device 101 forgoes extracting the first data corresponding to the first object based on the one or more images captured with the third lens, such as electronic device 101 forgoing extracting data corresponding to label 612b based on images captured with image sensor 114d in FIGs. 6A-6B when the user and/or electronic device 101 is at a distance from label 612a that is further than a threshold distance within three-dimensional environment 600 (e.g., when the user/electronic device 101 is at a distance from label 612a within three-dimensional environment 600 such that label 612a is fully visible via display 120). In some examples, forgoing extracting the first data corresponding to the first object based on the one or more images captured with the third lens refers to the decision by the electronic device not to initiate data extraction from images captured with the third lens when the first object is further from the user than the threshold distance. In some examples, when the first object is further from the user than the threshold distance, the system avoids redundancy and conserves computational resources by not capturing any images with the third lens.

In some examples, upon determining that the first quality metric is within a predefined margin of the quality metric threshold, electronic device 101 initiates a process to present instructions to the user to enhance the quality metric of the first data corresponding to the first object. For example, as illustrated in FIGs. 7A-7B, upon electronic device 101 determining that a fidelity of data extracted from label 712a and/or label 712b based on one or more images captured with image sensor 114b or 114c, respectively, (or a fidelity of the one or more images themselves) is within a predefined margin of the threshold fidelity, electronic device 101 presents instructions 740, via display 120, to the user. In some examples, the predefined margin of the threshold fidelity refers to a specific range or tolerance set around a benchmark fidelity level that determines acceptable quality. In some examples, the predefined margin defines how much deviation from the exact threshold fidelity is permissible while still considering the fidelity to be effectively meeting or approaching the standard necessary for adequate data representation. In some examples, the predefined margin is set as a percentage above or below the threshold fidelity (e.g., 1%, 2%, 5%, 10%, or 25%). In some examples, the instructions to the user to enhance the fidelity of the first data corresponding to the first object refer to specific guidance or actions that a user may take to improve the quality or clarity of the data extracted from the first object. Some examples of instructions to the user include, but are not limited to, instructions to increase camera stability (e.g., by keeping the camera steady), reposition the camera (e.g., by moving closer to or further from the first object or changing the angle of the camera), adjust camera settings (e.g., to increase resolution or image quality settings, switch to a different camera mode, or manually adjust the focus), modify environmental conditions (e.g., by increasing room lighting), clean the camera lens, follow calibration procedures, or any other potential actions a user may take to enhance data fidelity. In some examples, the process to present the instructions to the user involves a sequence of operations where the system overlays a visual representation of the instructions over the existing view in the three-dimensional environment. In some examples, initiating the process to present the instructions to the user involves generating and sending instructions to a separate display device to perform the task of overlaying the instructions. In some examples, initiating the process to present the instructions to the user involves storing the instructions corresponding to the first object for later use.

In some examples, the process to present the instructions is initiated before extracting the first data corresponding to the first object based on the one or more images captured with the second lens, such as electronic device 101 presenting instructions 740 before extracting data corresponding to label 712b based on one or more images captured with image sensor 114c (e.g., when data extracted from label 712a based on one or more images captured with image sensor 114b is within a predefined margin of the threshold fidelity) in FIGs. 7A-7B. In some examples, initiating the process to present the instructions before extracting the first data corresponding to the first object based on the one or more images captured with the second lens refers to the system's preemptive action of providing guidance to the user aimed at improving data capture prior to the actual data extraction from the images captured with the second lens.

In some examples, the process to present the instructions is initiated after extracting the first data corresponding to the first object based on the one or more images captured with the second lens, in accordance with a determination that a second quality metric corresponding to the first data corresponding to the first object based on the one or more images captured with the second lens is below the quality metric threshold. For example, as illustrated in FIGs. 7A-7B, electronic device 101 presents instructions 740 after extracting data corresponding to label 712b based on one or more images captured with image sensor 114c in accordance with a determination that a fidelity of the extracted data corresponding to label 712b is below the threshold fidelity. In some examples, the second fidelity has one or more characteristics of the first fidelity. In some examples, initiating the process to present the instructions after extracting the first data based on the one or more images captured with the second lens upon determining that the second fidelity still falls below the threshold fidelity refers to the system providing guidance to the user triggered after the first data has been extracted from images taken by the second lens and an assessment has been made that this data does not meet the required threshold fidelity.

In some examples, the first lens and the second lens are associated with a direction of the gaze of the user. For example, when electronic device 101 includes two or more pairs of image sensors 114b and 114c disposed on different locations of electronic device 101 (e.g., on the top, bottom, or sides), electronic device 101 may determine which pair of image sensors 114b and 114c to use for data extraction based on a detected direction of gaze point 320 of FIGs. 3A- 3C. In some examples, the first and second lenses being associated with the direction of the gaze of the user means that the lenses selected for capturing images are determined based on the current gaze direction of the user. In some examples, the electronic device includes multiple pairs of lenses distributed around a device or within a headset, each pair designed to cover different segments of the user's field of view, with the system switching between these pairs based on gaze direction. For example, when the user gazes towards a specific area (e.g., left, right, up, or down), the electronic device may activate the cameras with lenses facing that direction.

In some examples, electronic device 101 includes a third camera with a third lens and a fourth camera with a fourth lens, wherein the third lens corresponds to the first lens type and the fourth lens corresponds to the second lens type, such as if electronic device 101 in FIGs. 3A- 3C included a second pair of image sensors 114b and 114c.

In some examples, upon detecting the first lens is not operational, electronic device 101 extracts the first data corresponding to the first object based on the one or more images captured with the third lens. For example, if electronic device 101 in FIGs. 3A-3C included a second pair of image sensors 114b and 114c (e.g., image sensors 114b' and 114c', not shown), upon detecting image sensor 114b is not operational, electronic device 101 may extract data corresponding to label 312a based on one or more images captured with image sensor 114'. In some examples, detecting the first lens is not operational refers to the system identifying that the first lens is unable to perform its function due to a malfunction, blockage, damage, or other operational failure. In some examples, extracting the first data corresponding to the first object based on images captured with the third lens refers to the action of retrieving and processing information from images taken by an alternative camera setup (e.g., the third lens), which is initiated when the primary camera setup (e.g., the first lens) is detected as non-operational.

In some examples, upon detecting the second lens is not operational and in accordance with the determination that the one or more criteria are satisfied, electronic device 101 extracts the first data corresponding to the first object based on one or more images captured with the fourth lens. For example, if electronic device 101 in FIGs. 3A-3C included a second pair of image sensors 114b and 114c (e.g., image sensors 114b' and 114c', not shown), upon detecting image sensor 114c is not operational, electronic device 101 may extract data corresponding to label 312b based on one or more images captured with image sensor 114c'. In some examples, detecting the second lens is not operational has one or more characteristics of detecting the first lens is not operational. In some examples, extracting the first data corresponding to the first object based on one or more images captured with the fourth lens refers to the action of retrieving and processing information from images taken by an alternative camera setup (e.g., the fourth lens), which is initiated when the one or more criteria are satisfied and the primary camera setup (e.g., the first lens) is detected as non-operational.

In some examples, upon detecting the first lens is not operational, electronic device 101 extracts the first data corresponding to the first object based on the one or more images captured with the second lens, such as electronic device 101 extracting data corresponding to label 312b based on one or more images captured with image sensor 114c upon detecting image sensor 114b is not operational in FIGs. 3A-3C. In some examples, extracting the first data corresponding to the first object based on the one or more images captured with the second lens upon detecting the first lens is not operational refers to the action of retrieving and processing information from images taken by an alternative camera setup (e.g., the second lens), which is initiated when the primary camera setup (e.g., the first lens) is detected as non-operational.

In some examples, upon detecting the second lens is not operational, electronic device 101 extracts the first data corresponding to the first object based on the one or more images captured with the first lens, such as electronic device 101 extracting data corresponding to label 312a based on one or more images captured with image sensor 114b upon detecting image sensor 114c is not operational in FIGs. 3A-3C. In some examples, extracting the first data corresponding to the first object based on the one or more images captured with the first lens upon detecting the second lens is not operational refers to the action of retrieving and processing information from images taken by an alternative camera setup (e.g., the first lens), which is initiated when the primary camera setup (e.g., the second lens) is detected as non-operational.

Some examples are directed to an electronic device. The electronic device includes one or more processors, memory, and one or more programs stored in the memory and configured to be executed by the one or more processors, the one or more programs including instructions for performing any of the disclosed methods and/or examples.

Some examples are directed to a non-transitory computer readable storage medium storing one or more programs. The one or more programs include instructions, which when executed by one more processors of an electronic device, cause the electronic device to perform any of the disclosed methods and/or examples.

Some examples are directed to an electronic device. The electronic device includes one or more processors, memory, and means for performing any of the disclosed methods and/or examples.

Some examples are directed to an information processing apparatus for use in an electronic device. The information processing apparatus includes means for performing any of the disclosed methods and/or examples.

Although the disclosed examples have been fully described with reference to the accompanying drawings, it is to be noted that various changes and modifications will become apparent to those skilled in the art. Such changes and modifications are to be understood as being included within the scope of the disclosed examples as defined by the appended claims.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

## Claims

1. A method comprising:
at an electronic device in communication with one or more input devices, including a first camera with a first lens and a second camera with a second lens, wherein the first lens corresponds to a first lens type and the second lens corresponds to a second lens type, different from the first lens type:
while presenting a three-dimensional environment:
detecting, via the one or more input devices, a gaze of a user directed at a first object within the three-dimensional environment;
extracting first data corresponding to the first object based on one or more images captured with the first lens; and
in response to extracting the first data corresponding to the first object:
in accordance with a determination that one or more criteria are satisfied, including a criterion that is satisfied when the first data corresponding to the first object has a first quality metric below a quality metric threshold, extracting the first data corresponding to the first object based on one or more images captured with the second lens; and
in accordance with a determination that the one or more criteria are not satisfied, forgoing extracting the first data corresponding to the first object based on the one or more images captured with the second lens.

2. The method of claim 1, wherein the first lens type corresponds to a wide-angle lens and the second lens type corresponds to a telephoto lens.

3. The method of any of claims 1-2, wherein the one or more criteria include a criterion that is satisfied when the first object includes text that has a first point size smaller than a point size threshold.

4. The method of any of claims 1-3, further comprising:
while presenting the three-dimensional environment:
detecting a first input corresponding to a request to enlarge the first object; and
in response to detecting the first input:
extracting the first data corresponding to the first object based on the one or more images captured with the second lens, and
initiating a process to present an overlay of a portion of the first object based on the one or more images captured with the second lens.

5. The method of any of claims 1-4, wherein the one or more criteria include a criterion that is satisfied in accordance with a determination that the first object is at a first distance from the electronic device that is further than a threshold distance from the electronic device within the three-dimensional environment.

6. The method of any of claims 1-5, further comprising:
while presenting the three-dimensional environment:
in accordance with the determination that the one or more criteria are satisfied, including the criterion that is satisfied when the first data corresponding to the first object has the first quality metric below the quality metric threshold, and upon extracting the first data corresponding to the first object based on the one or more images captured with the second lens, initiating a process to present an overlay of a portion of the first object based on the one or more images captured with the second lens.

7. The method of any of claims 1-6, further comprising:
after extracting the first data corresponding to the first object, in response to detecting, via the one or more input devices, a first input corresponding to a request for second data corresponding to the first object, obtaining further information on the first object, including:
providing the first data corresponding to the first object to a large language model (LLM);
obtaining the second data corresponding to the first object from the LLM, the second data corresponding to the first object and being different from the first data corresponding to the first object; and
initiating a process to present the second data corresponding to the first object.

8. The method of any of claims 1-7, further comprising:
after extracting the first data corresponding to the first object, automatically obtaining further information on the first object without an input from the user, including:
providing the first data corresponding to the first object to an LLM;
obtaining second data corresponding to the first object from the LLM, the second data corresponding to the first object and being different from the first data corresponding to the first object; and
initiating a process to present the second data corresponding to the first object.

9. The method of any of claims 1-8, wherein the one or more input devices include a third camera with a third lens, the third lens having a wider field of view than the first lens and the second lens, the method further comprising:
in response to extracting the first data corresponding to the first object:
in accordance with a determination that a respective set of one or more criteria are satisfied, including a criterion that is satisfied when the first object is at a first distance from the electronic device closer than a threshold distance from the electronic device within the three-dimensional environment, extracting the first data corresponding to the first object based on one or more images captured with the third lens; and
in accordance with a determination that the one or more criteria are not satisfied, forgoing extracting the first data corresponding to the first object based on the one or more images captured with the third lens.

10. The method of any of claims 1-9, further comprising:
upon determining that the first quality metric is within a predefined margin of the quality metric threshold, initiating a process to present instructions to the user to enhance the first quality metric of the first data corresponding to the first object,
wherein the process to present the instructions is initiated before extracting the first data corresponding to the first object based on the one or more images captured with the second lens.

11. The method of any of claims 1-10, further comprising:
upon determining that the first quality metric is within a predefined margin of the quality metric threshold, initiating a process to present instructions to the user to enhance the first quality metric of the first data corresponding to the first object,
wherein the process to present the instructions is initiated after extracting the first data corresponding to the first object based on the one or more images captured with the second lens, in accordance with a determination that a second quality metric corresponding to the first data corresponding to the first object based on the one or more images captured with the second lens is below the quality metric threshold.

12. The method of any of claims 1-11, wherein the electronic device includes a third camera with a third lens and a fourth camera with a fourth lens, wherein the third lens corresponds to the first lens type and the fourth lens corresponds to the second lens type, the method further comprising:
upon detecting the first lens is not operational, extracting the first data corresponding to the first object based on the one or more images captured with the third lens; and
upon detecting the second lens is not operational and in accordance with the determination that the one or more criteria are satisfied, extracting the first data corresponding to the first object based on one or more images captured with the fourth lens.

13. The method of any of claims 1-12, further comprising:
upon detecting the first lens is not operational, extracting the first data corresponding to the first object based on the one or more images captured with the second lens; and
upon detecting the second lens is not operational, extracting the first data corresponding to the first object based on the one or more images captured with the first lens.

14. An electronic device, comprising:
one or more processors;
memory; and
one or more programs stored in the memory and configured to be executed by the one or more processors, the one or more programs including instructions for performing a method of any of claims 1-13.

15. A non-transitory computer readable storage medium storing one or more programs, the one or more programs comprising instructions, which when executed by one more processors of an electronic device, cause the electronic device to perform a method of any of claims 1-13.
